# EUROPEAN PATENT APPLICATION

(11) **EP 1 739 525 A1**
(43) Date of publication of application: **03.01.2007**
(21) Application number: 05709526.7
(22) Date of filing: 01.02.2005
(51) Int. Cl.: G06F 3/00, G06F 3/14

(54) **ELECTRONIC DEVICE**

(30) Priority: 31.03.2004 JP 2004103016; 28.10.2004 JP 2004314484
(71) Applicant: SHARP KABUSHIKI KAISHA, Osaka-shi, Osaka 545-8522 (JP)
(72) Inventor: SHIMIZU, Hajime, Edogawa-ku, Tokyo 1340091 (JP)
(74) Representative: Müller, Frithjof E.
(86) International application number: PCT/JP2005/001380
(87) International publication number: WO 2005/101172

(57) **Abstract**

There is provided a mobile terminal device for processing icon image information corresponding an icon whose selection has been detected and continuously displaying the icon image according to the new icon image information. Here, the icon image which has been processed after the display end is erased and not held in the mobile terminal device. Accordingly, a small memory of the mobile terminal device is not used by them. Moreover, the icon whose selection is detected may be processed only partially. Furthermore, among the icon image information corresponding to the icon detected, information indicating the color of the icon or information indicating the luminance may be entirely or partially changed so as to realize the variety of display.

## Description

### BACKGROUND OF THE INVENTION

### Field of the Invention

One of the characteristic features of the present invention is that it is structured such that while an icon is being selected, such icon continues to move. Another characteristic feature of the present invention is that it is structured such that although a moving icon is displayed, it is not necessary to store a moving picture file.

### Description of the Related Art

Conventionally, in mobile terminal devices, when the selection of a moving icon is indicated, a plurality of images is successively switched so as to realize a moving picture. Additionally, an icon set-up system that downloads icon images and additional information via a network from external servers, etc., already exists and such icon images are displayed and changed based on such additional information (refer to patent documents 1 and 2). Patent document 1: Kokai (Japanese Unexamined Patent Publication) No. 2003-005946

However, according to the method whereby the aforementioned plurality of images is successively switched, it is required for a plurality of images used for switching to be accumulated inside the mobile terminal device. Thus, considerable portions of the limited resources thereof must be used for the accumulation of such images. Additionally, this method only allows the realization of icons as moving pictures through use of images that have been already accumulated, and users tend to get bored with existing images. However, it is difficult for users to generate or use moving pictures of original icons through utilizing images that they have taken or generated independently. On the other hand, through the method that displays and changes icon images based on additional information, when icon change is desired, it is necessary to download required data from servers via a network, which is cumbersome.

### SUMMARY OF THE INVENTION

A first aspect of the present invention provides an electronic device that displays moving picture icons that has a screen displaying moving picture icons where when a corresponding icon is selected, such icon continues to move. The display of a moving picture icon is performed until another icon is selected or until the electronic device enters power-saving mode. In the meantime, in order to cause the moving picture to continue to be displayed, the moving picture may be moved and displayed. Additionally, a moving picture may be generated in combination with a still image of a background portion and a moving picture portion.

A second aspect of the present invention provides a mobile terminal device that processes icon image information corresponding to an icon regarding which selection has been detected, and that sequentially displays icon images based on such new icon image information. At this time, icon images are generated with regard to a display of icon image in a sequential manner, such images are deleted after end of display, and new icon image information is not stored in the mobile terminal device after generation. Thus, only a small amount of the memory of the mobile terminal device is consumed. Alternatively, only partial processing may be performed in regards to the icon whose selection has been detected. Additionally, when selection is detected, processing or change concerning images is also performed in relation to icon image information that does not correspond to the relevant icon or to the background image information that constructs the background in some cases. Moreover, from among the icon image information that corresponds to the detected icon, it is acceptable to change a whole or a part of the information relating to the color of icon or information relating to luminance.

At the same time, icon image information in order to show an icon through shooting and obtaining of an icon image by a mobile terminal device may be acquired. Additionally, in regards to icon images whose selection is detected, the portion where luminance is large is extracted and a *kirakira-mark* ("sparkling mark") is displayed in relation to the extracted item within the icon image. And the *kirakira-mark* is transferred in a form such that such *kirakira-mark* is moving to the corresponding icon where selection is detected, and is displayed. A circular ripple pattern can be formed in the icon images when selection is detected. It is possible to realize such matters.

The first aspect of the present invention is explained as follows. In case where the display of a moving picture icon is instantaneous, if a user misses the movement, it is difficult to know which icon has been selected. However, the electronic device that displays moving picture icons of the first aspect of the present invention has the advantageous effect that while the icon is being selected and the moving picture icon continues to move, it is easy to determine which icon has been selected.

In the second aspect of the present invention, display is performed accompanied by a visual effect such as an effect whereby the selected icon shines or the like. Thus, the display screen of the mobile terminal device may be small and it is easy to determine which icon has been selected. Additionally, the new icon image information is not stored in the mobile terminal device after processing. Therefore, the display of the moving picture can be realized consuming only a small amount of memory regarding the mobile terminal device, which is efficient. Moreover, in case where processing is performed in regards to a part of an icon, the display of a moving picture with natural movement can be realized, rather than performing processing in regards to the entire icon. It is possible to realize a condition of fewer burdens of processing by the mobile terminal device, and processing can be speeded up. Furthermore, processing is possible in regards to an icon that is not selected, a background image, and the color or luminance of the selected icon image, as well as in regards to the selected icon. Due to this, variations concerning the display of moving pictures accompanying selection of an icon can be enhanced, and the selected icon can be further emphasized.

In addition, in the second aspect of the present invention, based on the use of the image obtained through shooting by a user, an icon can be freely generated and be displayed as a moving picture. There exists utility value as an additional function concerning the mobile terminal device. Also, when a *kirakira-mark* is displayed on a portion at which luminance is high, the bright portions can be further emphasized and luminance can be enhanced in a natural manner. In case that a *kirakira-mark* is transferred and displayed in a form such that it is moving from the icon where selection has been previously detected to the corresponding icon where selection is detected, the *kirakira-mark* is displayed for a relatively long time. Thus, it is easy to determine which icon has been selected. Furthermore, it is possible to form wave patterns in regards to a selected icon image. Due to this, variations concerning the display of moving pictures accompanying selection of icon can be enhanced, and the selected icon can be further emphasized.

### BRIEF DESCRIPTION OF THE DRAWINGS

The present invention will become more fully understood from the detailed description given hereinbelow and the accompanying drawings which are given by way of illustrations only, and thus are not limitative of the present invention, and wherein:
FIG 1 is a conceptual diagram explaining the first embodiment;
FIG. 2 is a functional diagram explaining the first embodiment;
FIG 3. is a diagram explaining the process flow of the first embodiment;
FIG. 4 is a functional diagram explaining the second embodiment;
FIG. 5 is a functional diagram explaining the third embodiment;
FIG. 6 is a functional diagram explaining the fourth embodiment;
FIG. 7 is a functional diagram explaining the fifth embodiment;
FIG 8 is a diagram explaining the process flow of the fifth embodiment;
FIG. 9 is a conceptual diagram explaining the sixth embodiment;
FIG. 10 is a functional diagram explaining the seventh embodiment;
FIG. 11 is a diagram explaining the process flow of the seventh embodiment;
FIG. 12 is a diagram explaining the process flow of the ninth embodiment;
FIG. 13 is a conceptual diagram explaining the eleventh embodiment;
FIG. 14 is a functional diagram explaining the eleventh embodiment;
FIG. 15 is a diagram explaining the process flow of the eleventh embodiment;
FIG. 16 is a conceptual diagram explaining the twelfth embodiment;
FIG. 17 is a functional diagram explaining the thirteenth embodiment;
FIG. 18 is a functional diagram explaining the fourteenth embodiment;
FIG. 19 is a functional diagram explaining the fifteenth embodiment;
FIG. 20 is a functional diagram explaining the sixteenth embodiment;
FIG 21 is a functional diagram explaining the seventeenth embodiment;
FIG. 22 is a functional diagram explaining the eighteenth embodiment;
FIG. 23 is a functional diagram explaining the nineteenth embodiment;
FIG. 24 is a conceptual diagram explaining the nineteenth embodiment;
FIG. 25 is a functional diagram explaining the twentieth embodiment;
FIG. 26 is a diagram showing one of the examples of display concerning the twentieth embodiment;
FIG. 27 is a diagram showing another example of display concerning the twentieth embodiment;
FIG. 28 is a functional diagram explaining the twenty-first embodiment;
FIG. 29 is a diagram showing one of the examples of display concerning the twenty-first embodiment; and
FIG. 30 is a functional diagram explaining the sixth embodiment.

### DETAILED DESCRIPTION OF THE INVENTION

Embodiments that implement the present invention will be described in details hereinafter with reference to the drawings. The present invention is not limited by such embodiments, and can be implemented in various forms, without departing from the scope of the invention.

### (First embodiment)

### (Concept)

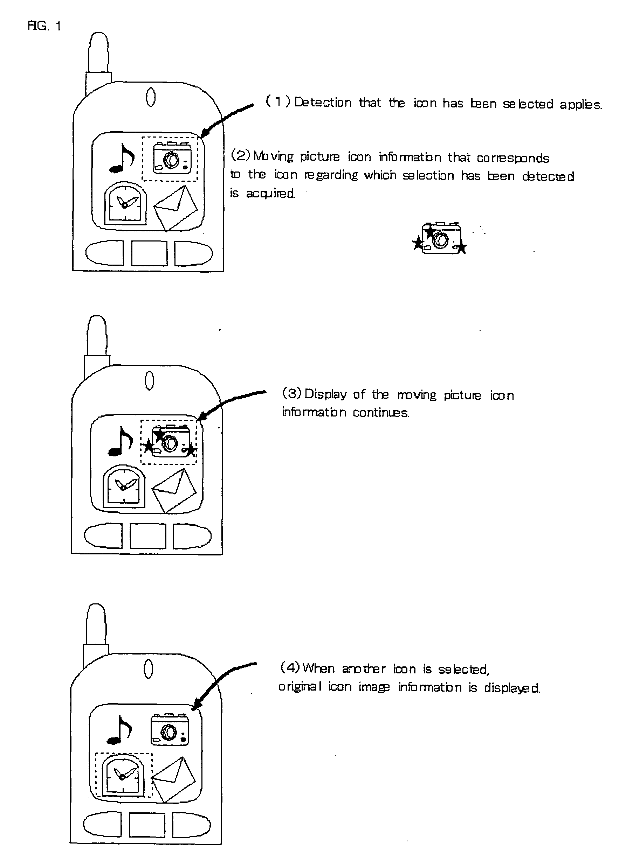

The embodiment relates to an electronic device that displays moving picture icons where while the corresponding icon continues to move when selected, and where display of an icon can be efficiently conveyed to a user. FIG 1 is a conceptual diagram showing the concept of the first embodiment. Four icons are shown on a screen of the electronic device shown by the diagram. Hypothetically, a user selects an upper right-hand camera icon (1). The electronic device acquires the moving picture icon image information that corresponds to the camera icon (2). Subsequently, the acquired moving picture icon image information is displayed on a screen (3). Displaying of the moving picture icon image information is continuously performed while the icon is being selected. However, for example, if the user selects another icon, displaying of the moving picture icon image information ends, and the original icon image information is displayed (4).

### (Constitution)

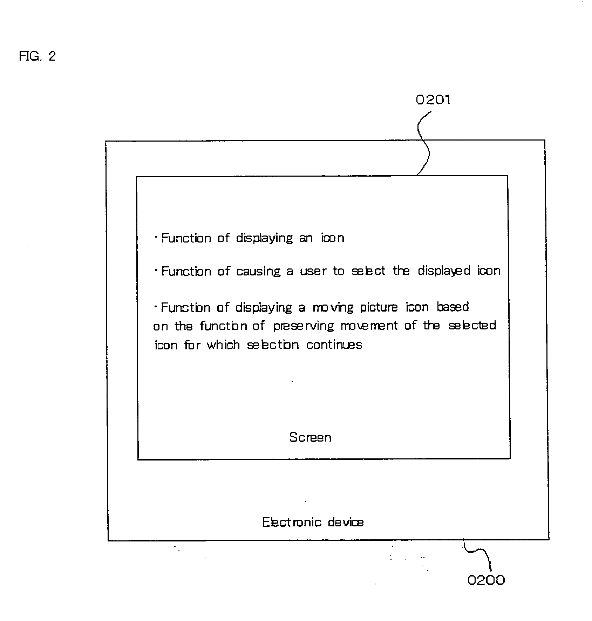

An example of a functional block diagram of the first embodiment is shown in FIG. 2. In regards to the "electronic device" of the first embodiment shown in FIG.2 (0200), the "screen" (0201) is constituent feature thereof. This screen displays the moving picture icon such that while the icon is being selected, such icon continues to move.

The "electronic device" (0200) of the present invention means an electronic device that enables display of a moving picture icon on the screen. For example, cellular phones, PDAs, notebook computers, and desktop computers correspond thereto.

The "screen" (0201) means the interface that conveys to users information and instructions contained in the electronic device in a visual manner. More specifically, this is an interface that enables display of images and letters through use of liquid crystal and/or light-emitting diodes, etc. And as mentioned above, the function of displaying an icon, the function of causing a user to select the displayed icon, the function of keeping the selected icon moving while such selection is continued, and the function of displaying a moving picture icon is maintained by the aforementioned screen.

The icon means an indicator on the screen used in order to access programs or files. "Icon is being selected" may mean both or either of: a case in which a pointing graphic area (area shown by cursor or arrow) as guided by a pointing device (for example, a mouse, a pointing pad, a touch panel, an arrow key of cellular phone, and a numeric keypad, etc.) is moved onto the icon; and a case in which such pointing graphic area is moved onto the icon and a mouse is clicked. Additionally, the pointing device is not limited to a mouse, and any type of item may be acceptable.

From among the items of image information that indicate an icon, the "moving picture icon" means information that continues to move. "Keep moving" means a condition such that a user can recognize a state where an image continues to change with his or her own eyes. Even if the movements are temporarily suspended, if the user can recognize a state of change with his or her own eyes, such state can be considered to "keep moving." Image information of the moving picture icon may be structured by collection of a plurality of image files in the form of still image, such as in BMP, JPG, or GIF formats. Alternatively, such icon may be structured by only one image file in the form of an MPG, AVI, or RAM moving picture, or may be structured in an analog format. The moving picture icon may be displayed in the same position as the icon. On the other hand, the moving picture icon may be displayed in a different position than the icon. Even if the moving picture is displayed in a different position than the icon, if a user can recognize that there exists some relationship with the icon, display of the moving picture icon can enable the user to understand that the icon has been selected.

### (Processing flow)

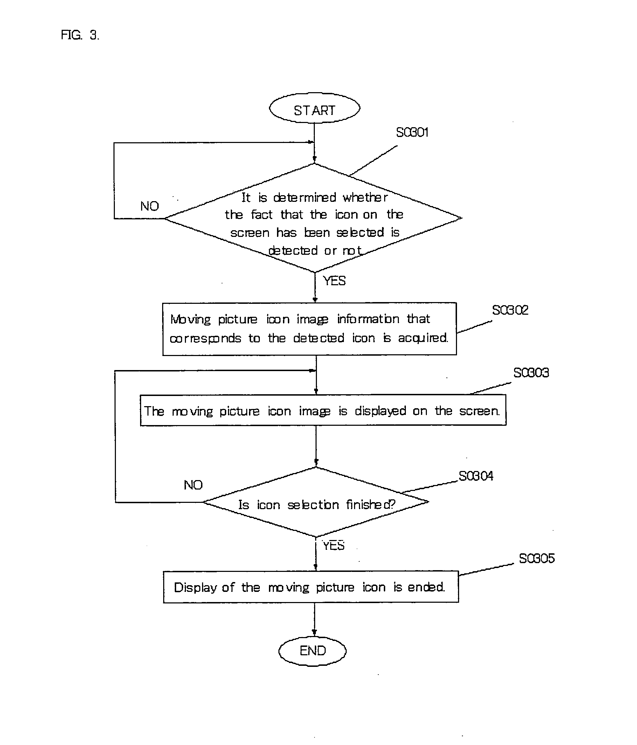

FIG. 3 shows one of the examples concerning the process flow of the first embodiment. The method of operation concerning the electronic device that displays moving picture icons of the embodiment is based on the steps shown below.

First of all, in regards to the step of selecting and detecting the icon (S0301), the process of detecting that the icon has been selected is performed. And here, when a user applies the pointing graphic area to the icon, the result of judgment that selection of the icon has been detected is outputted, and the following step processes are performed. At this time, the icon identification information is also simultaneously outputted. In case that the user has not selected the icon, the result of judgment that selection of icon has not been detected is outputted, and the following step processes are not performed.

In regards to the step of acquiring the moving picture icon image information (S0302), after selection of the corresponding icon is detected, the moving picture icon image information that corresponds to the icon identification information is acquired. Subsequently, in relation to the step of displaying the moving picture icon image information (S0303), the moving picture icon is displayed on the screen based on the acquired moving picture icon image information. Display of moving picture icon continues until the judgment result to the effect that selection of the icon is completed is outputted (S0304). When the judgment result is made to the effect that the selection of the icon is completed, the display of the moving picture icon is suspended (S0305). In regards to cases in which the judgment result is made to the effect that the selection of the icon is completed, there exists a case in which another icon is selected and a case in which the program that corresponds to the icon is started and the screen is changed, etc.

### (Effect)

In the first embodiment, the continuous movement of the corresponding icon can be clearly conveyed to a user in regards to the selection of the icon.

### (Second embodiment)

### (Concept)

In the same manner as in the first embodiment, the second embodiment relates to an electronic device that displays moving picture icons, where while a corresponding icon is being selected, the continuous movement of the corresponding icon can be clearly conveyed to a user in regards to the selection of the icon.

### (Constitution)

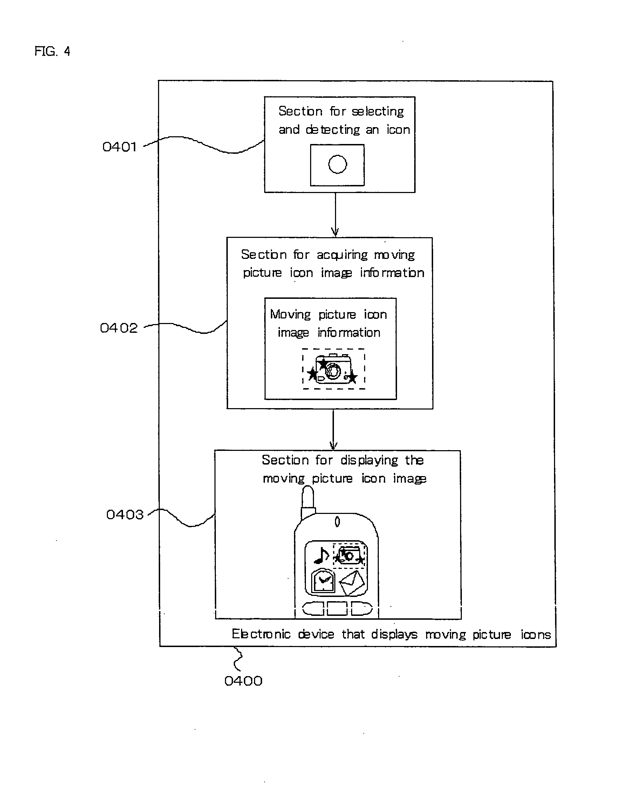

An example of a functional block diagram of the second embodiment is shown in FIG. 4. The "electronic device that displays moving picture icons" of the embodiment shown in FIG. 4 (0400) comprises the "section for selecting and detecting an icon" (0401), the "section for acquiring moving picture icon image information" (0402), and the "section for displaying the moving picture icon image" (0403).

The sections that are the components of the present invention are composed of one related to hardware, software, or both hardware and software. For instance, in case where a computer is used as one of the example to realize the aforementioned items, hardware that comprises the CPU, memory, bus, interface, and peripheral devices, and software that can be executable on such hardware, apply. More specifically, sequential execution of the programs that are employed in the memory can realize the functions of the sections through processing, accumulating, and outputting of the data in the memory or the data inputted via the interface (and the same applies throughout the entirety of this specification).
An "electronic device that displays moving picture icons" (0400) means an electronic device that can display the moving picture icon on the screen. For instance, cellular phones, PDAs, laptop computers, and desktop personal computers apply.

The "section for selecting and detecting an icon" (0401) detects that the corresponding icon on the screen is selected. When a user operates the pointing device of the electronic device and selects one of the icons, such section detects that the corresponding icon has been selected as being related to the information that identifies the icon. The information outputted as a result of the detection is the information showing that the icon has been selected and the icon identification information showing which icon has been selected.

The "section for acquiring moving picture icon image information" (0402) acquires the moving picture icon image information based on the icon identification information outputted through the section for selecting and detecting an icon. The "moving picture icon image information" means the information that constructs a whole or a part of the icons that can be selectable based on the pointing graphic area as instructed by the pointing device, and represents information in the digital form relating to the moving picture icon image (regardless of whether it is a colored or monochrome image). The entirety of each icon is not necessarily displayed only through the moving picture icon image information alone. Furthermore, the moving picture icon image information contains information that relates to the icon identification information. The moving picture icon image information may be structured based on the collection of a plurality of image files in the form of a still image, such as via BMP, JPG, or GIF. Alternatively, such information may be composed of only one image file in the form of a moving picture, such as via MPG, AVI, or RAM. As for the method of acquisition, there exist a method for obtaining image information through external communication functions, a method for obtaining image information generated independently by the electronic device, and a method allowing the electronic device to store image in advance and to use the same, etc.

The "section for displaying the moving picture icon image" (0403) performs displaying of the image information acquired through the section for acquiring moving picture icon image information on the screen. That is to say, such section indicates the information concerning luminance and colors that corresponds to the moving picture icon image information through the use of liquid crystal or light-emitting diodes, etc., in a visual manner.

### (Processing flow)

The process flow of the second embodiment is omitted because it is the same as that of the first embodiment.

### (Effect)

A screen of an electronic device such as a cellular phone is so small that a user has trouble seeing it and has difficulty knowing which icon has been selected in some cases. According to the electronic device that displays moving picture icons of this embodiment, the selected icon is displayed as a moving picture, and is indicated while the icon is being selected, in a non-instantaneous manner. Thus, even if the screen is small, it is easy to understand which icon has been selected.

### (Third embodiment)

### (Concept)

The third embodiment relates to the electronic device that displays moving picture icons that relates the moving picture icon display information to the icon and stores the same within its own electronic device.

### (Constitution)

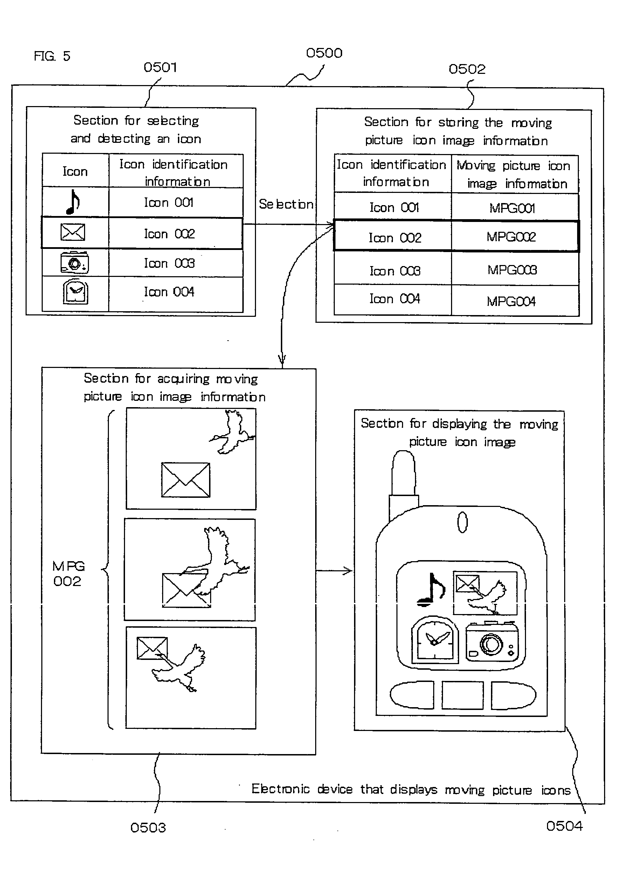

An example of a functional block diagram of the third embodiment is shown in FIG. 5. The "electronic device that displays moving picture icons" (0500) of the embodiment shown in FIG. 5 comprises a "section for selecting and detecting an icon" (0501), a "section for storing the moving picture icon image information" (0502), a "section for acquiring moving picture icon image information" (0503), and a "section for displaying the moving picture icon image" (0504).

The "section for selecting and detecting an icon" (0501) detects that the icon on the screen has been selected and outputs the icon identification information that corresponds to such icon. As for the example of FIG. 5, since the icon of the mail has been selected, the icon identification information (icon 002) is outputted.

The "section for storing the moving picture icon image information" (0502) stores the moving picture icon image information displayed on the screen within the memory of the electronic device that displays moving picture icons. The moving picture icon image information is stored as being related to the icon based on the icon identification information. Such process is based on the reason that when the moving picture icon image information is acquired, recognition is possible regarding which information is obtained from among a plurality of items of moving picture icon image information. As for the example of FIG. 5, the moving picture information MPG 001-004 is stored according to the icon identification information 001-004. The icon identification information may be fixed, although such information may be changed based on the user's intentions. According to the example of FIG. 5, initially, MPG001 is related to the icon 001 and MPG002 is related to the icon 002. On the other hand, MPG001 may be related to the icon 002 and MPG002 may be related to the icon 001 based on a change by the user. The moving picture icon image information can be stored in the hard disk, removable smart media, an IC card, or an IC chip that is incorporated into the electronic device.

The "section for acquiring moving picture icon image information" (0503) acquires the moving picture information stored in the "section for storing the moving picture icon image information" (0502) based on the icon identification information outputted through the section for selecting and detecting an icon. As for the example of FIG. 5, the moving icon image information (MPG002) is acquired according to the selected icon identification information (icon 002).

The "section for displaying the moving picture icon image" (0504) displays the moving picture on the screen based on the moving picture icon image information acquired through the "section for acquiring moving picture icon image information" (0503). As for the example of FIG. 5, the moving picture is displayed on the screen based on MPG002.

### (Processing flow)

In the embodiment, in regards to a step for acquiring the moving picture icon image information (S0302), the moving picture icon image information is acquired from the section for storing the moving picture icon image information. Other aspects of the process flow are the same as those of the first embodiment.

### (Effect)

The moving picture icon image information that should be displayed is stored by the electronic device in advance. Thus, it is not necessary to generate the same upon displaying. Therefore, since it is not necessary to perform computations that impose a heavy burden in terms of generation of a moving picture image, the computer resources can be used for other processes, and furthermore, services can be enhanced.

### (Fourth embodiment)

### (Concept)

The fourth embodiment relates to an electronic device that displays moving picture icons when it selects a single icon, a plurality of moving picture information items is composed, a single item of moving picture information is generated, and the moving picture is displayed based on the aforementioned generated moving picture information.

### (Constitution)

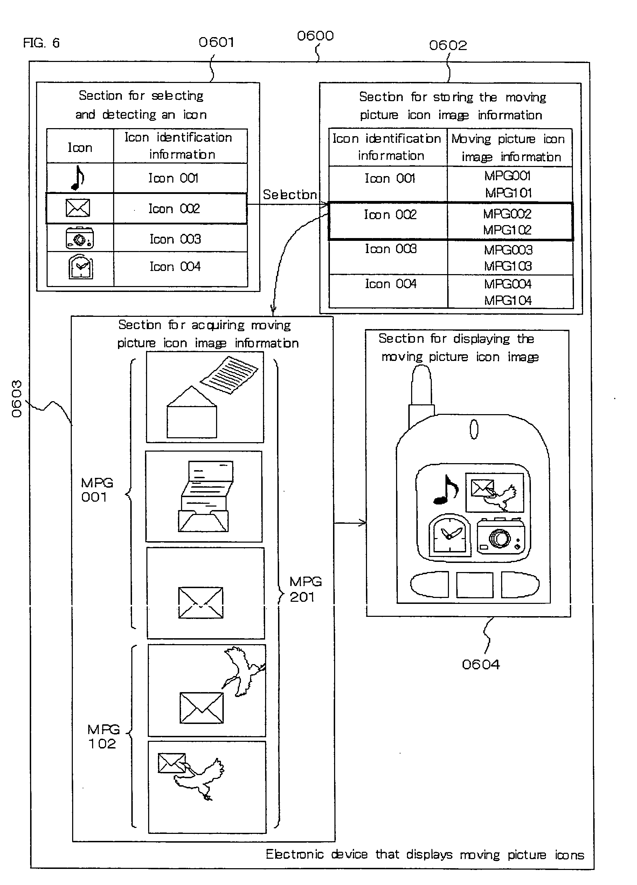

An example of a functional block diagram of the fourth embodiment is shown in FIG. 6. The "electronic device that displays moving picture icons" (0060) comprises the "section for selecting and detecting an icon" (0601), the "section for storing the moving picture icon image information" (0602), the "section for acquiring moving picture icon image information" (0603), and the "section for displaying the moving picture icon image" (0604).

The "section for selecting and detecting an icon" (0601) detects that the icon on the screen has been selected and outputs the icon identification information that corresponds to such icon. As for the example of FIG. 6, since the icon of the mail is selected, the icon identification information (icon 002) is outputted.

The "section for storing the moving picture icon image information" (0602) stores a plurality of items of moving picture information according to an item of icon identification information. The moving picture information may be related to a plurality of items of icon identification information. As for the example of FIG. 6, the moving picture information MPG002 and MPG102 are stored as being related to the icon identification information (icon 002).

The "section for acquiring moving picture icon image information" (0603) reads a plurality of items of the moving picture information according to the selected icon from the "section for storing the moving picture icon image information" (0602), composes such items of moving picture information, and obtains new moving picture information. Additionally, even if no composition thereof is made, consecutive displaying of a plurality of items of the moving picture information in a seamless manner enables new moving picture icons to be displayed. As such, a combination of a plurality of items of moving picture information is possible. Thus, even if only a small amount of moving picture icon image information is stored, displaying of the moving picture icon with many variations is possible. Moreover, a method of combination does not always have to involve the combination of two items of moving picture icon image information, but 3 items of moving picture icon image information or more may be combined. According to the example of FIG. 6, the new moving picture information MPG201 is obtained through composition of MPG001 and MPG102. In the same manner as in the third embodiment, the icon identification information may be changed based on a user's intentions. In such case, the combination of the moving picture displayed on the screen can be selected based on a user's intentions. As for the example of FIG. 6, composition is made so that MPG 102 is displayed after MPG001 1 is shown. On the other hand, composition may be made so that MPG001 is displayed after MPG102 is shown through changing the icon identification information (icon 002).

The "section for displaying the moving picture icon image" (0604) displays the moving picture based on the moving picture icon image information acquired through the "section for acquiring moving picture icon image information" (0603). Here, a method of displaying a plurality of items of the acquired moving picture icon image information does not have to be uniform. Variations may apply to the order of displaying, displaying portions, or the length of displaying time concerning a plurality of items of the moving picture icon image information, as the case may be. Due to these variations concerning display, despite using the only two items of the moving picture icon image information, display of moving picture icons may be possible based on many variations in some cases.

### (Processing flow)

In the fourth embodiment, in regards to the step for acquiring the moving picture icon image information (S0302) shown in FIG. 3, a plurality of items of moving picture icon image information is obtained from the section for storing the moving picture icon image information. Other aspects of the process flow are the same as that of the first embodiment.

### (Effect)

In the fourth embodiment, when one icon is selected, a plurality of the moving pictures is displayed. Thus, a user can enjoy variations of the images.

### (Fifth embodiment)

### (Concept)

The fifth embodiment relates to the electronic device that displays moving picture icons that has a function of composing information so as to display the only moving portions and so as to display only still image portions, and to generate the moving picture icon image information.

### (Constitution)

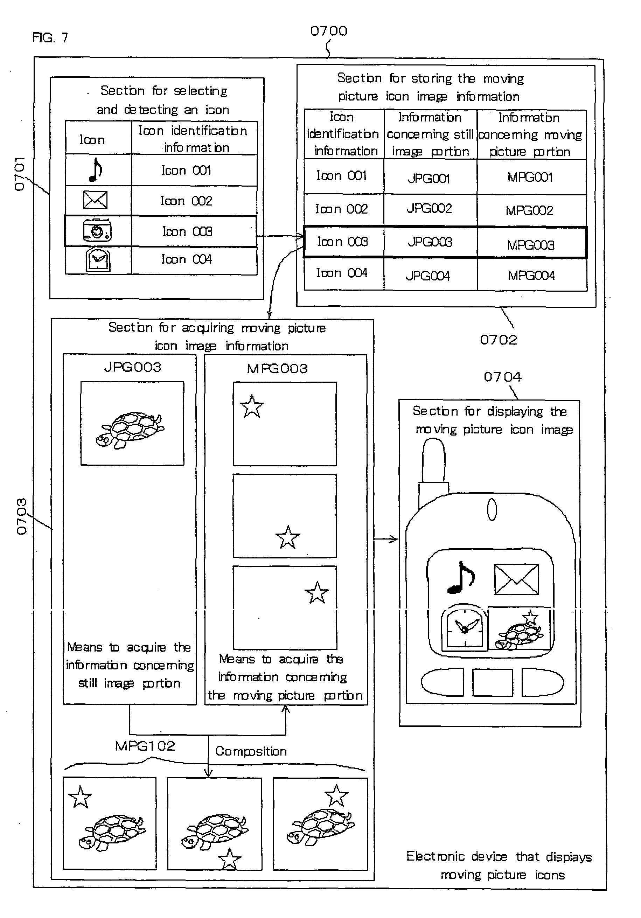

An example of a functional block diagram of the fifth embodiment is shown in FIG. 7. The "electronic device that displays moving picture icons" of the embodiment shown in FIG. 7 (0700) comprises the "section for selecting and detecting an icon" (0701), the "section for storing the moving picture icon image information" (0702), the "section for acquiring moving picture icon image information" (0703), and the "section for displaying the moving picture icon image" (0704). Furthermore, the "section for acquiring moving picture icon image information" (0703) comprises the "means to acquire the information concerning still image portion" (0705) and the "means to acquire the information concerning the moving picture portion" (0706).

The "section for selecting and detecting an icon" (0701) detects that the icon on the screen has been selected and outputs the icon identification information that corresponds to such icon. As for the example of FIG. 7, the icon of a camera that is being displayed on the screen is selected and the icon identification information (icon 003) that corresponds to such icon is outputted.

The "section for storing the moving picture icon image information" (0702) relates the information concerning the moving picture portion and the information concerning a still image portion, in regards to one item of icon identification information. As for the example of FIG. 7, in relation to the icon identification information (icon 003), the information concerning a still image portion identified based on the identification information JPG003 and the information concerning the moving picture portion identified based on the identification information MPG003 are related to each other.

From among the items of moving picture icon image information, the "means to acquire the information concerning a still image portion" (0705) acquires information concerning a still image portion that does not change over time. As the information concerning a still image portion, for example, background image information corresponds thereto. The information concerning a still image portion can be indicated in a format of BMP, JPG, GIF, or the like. As for the example of FIG. 7, JPG003, which is indicated by a picture of a turtle, is the information concerning a still image portion. Such information concerning a still image portion may be stored in the section for storing the moving picture icon image information, or may be structured to be obtained from other sections.

From among the items of moving picture icon image information, the "means to acquire the information concerning the moving picture portion" (0706) acquires the information concerning the moving picture portion as the image information that corresponds only to a portion that changes in over time. As for the example of FIG. 7, the information identified through MPG003, where stars are moving, is the information concerning the moving picture portion. In the moving picture icon image, the moving portion is limited. Therefore, the capacity of the information concerning the moving picture portion may be smaller than a case in which the entire icon is a moving picture.

The moving picture icon image information acquired by the "section for acquiring moving picture icon image information" (0703) is information that combines the information concerning a still image portion and the information concerning the moving picture portion. That is to say, the moving picture icon image information comprises the information concerning a still image portion and the information concerning the moving picture portion in case of this embodiment. The example of FIG. 7 shows the moving picture icon image information that acquires the information identified by MPG102 that indicates the moving picture in a combination of a still image of a turtle (JPG003) and a moving picture of moving stars (MPG003). In addition, acquiring of the moving picture icon image information based on the information concerning the moving picture portion and the information concerning a still image portion may constitute a pattern to compose both of the same or may constitute a pattern to acquire both of the same separately and to handle the same so that such information is displayed in piles in the section for displaying the moving picture icon image, as explained below.

The "section for displaying the moving picture icon image" (0704) displays the moving picture on the screen based on the moving picture information acquired by the "section for acquiring moving picture icon image information" (0703). As for the example of FIG. 7, in regards to the image that should be displayed in relation to the information concerning a still image portion of a turtle identified by JPG003, the image that should be displayed based on the information concerning the moving picture portion identified by MPG003 is simultaneously displayed on the screen. Such displayed image corresponds to the moving picture icon. In addition, the same does not exclude the existence of portions that structure a moving picture icon other than the aforementioned case.

### (Processing flow)

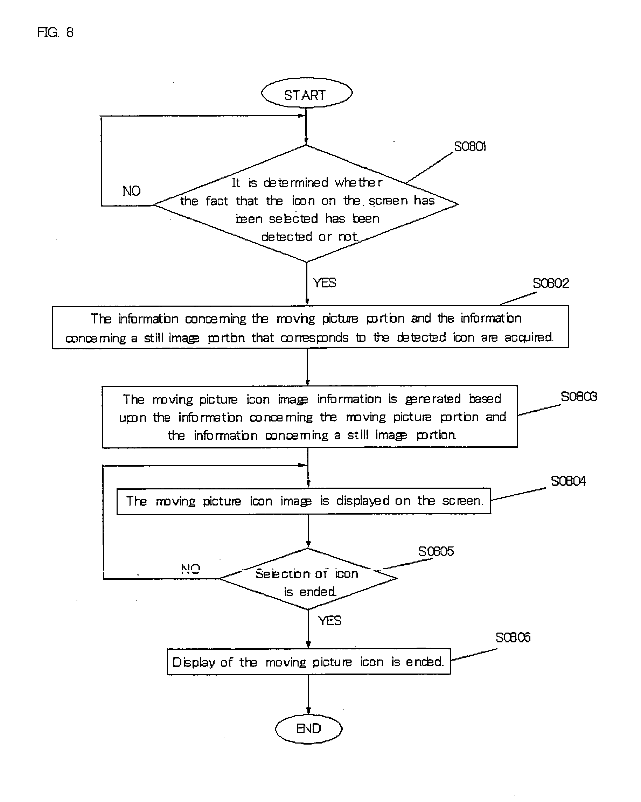

An example of a process flow of the fifth embodiment is shown in FIG. 8. The step for selecting and detecting an icon (S0801) is the same as that of the first embodiment. Based on the icon identification information outputted through the step for selecting and detecting an icon (S0801), the information concerning the moving picture portion and the information concerning a still image portion are acquired (S0802). Subsequently, the information concerning the moving picture portion and the information concerning a still image portion are composed and the moving picture icon image information is generated (S0803). The processes thereafter are the same as those of the first embodiment.

### (Effect)

In the fifth embodiment, since the moving picture icon image information is generated in a combination comprising the information concerning a still image portion and the information concerning the moving picture portion, the capacity can be smaller than a case in which entirety of the moving picture icon image information is obtained as the moving picture information. Due to this, the storage capacity of the electronic device can be preserved. Moreover, since not much time is spent reading the moving picture information, the display speed of the moving picture increases, and an image with smooth movements can be displayed.

### (Sixth embodiment)

### (Concept)

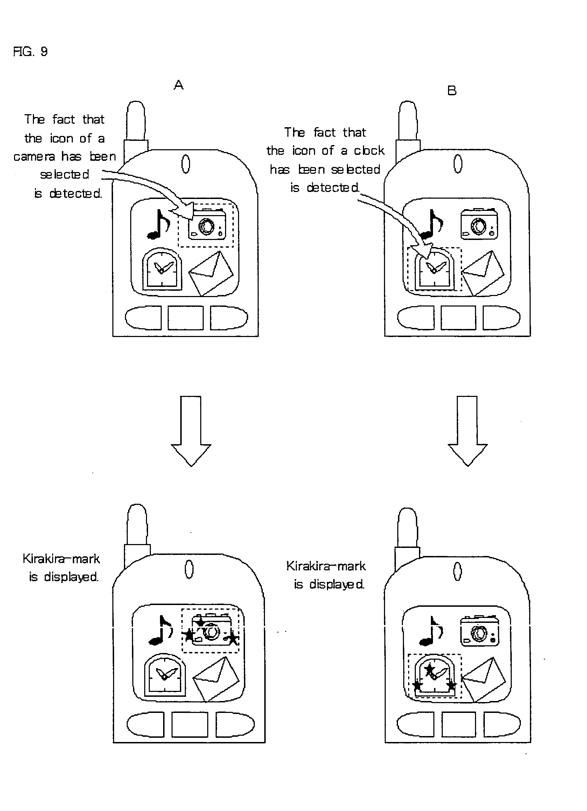

From among the items of information concerning the moving picture portion and the information concerning a still image portion that structures the moving picture information, the embodiment relates to the electronic device that displays moving picture icons where one item of the information concerning the moving picture portion is used commonly for a plurality of icons. A of FIG. 9 shows one of the examples of concepts of the embodiment. As for A of FIG. 9, the "section for selecting and detecting an icon" detects that the corresponding icon of a camera is selected. Subsequently, the information concerning a still image portion regarding the camera that is related to the icon of the camera and the *kirakira-mark,* which is the information concerning the moving picture portion, are combined and the combined moving picture is displayed on the screen. Additionally, as for B of FIG. 9, the electronic device detects that the corresponding icon of clock is selected. Next, the still image that corresponds to the icon of clock and the *kirakira-mark* as the moving picture are combined, and the combined moving picture is displayed on the screen. The moving picture when the icon of camera is selected and the moving picture when the icon of clock is selected are different from each other. However, the *kirakira-mark* is commonly used as the moving picture. When the *kirakira-mark* as the moving picture is always displayed on the icon that has been selected, it is easy for a user to determine which icon has been selected. In addition, originally, the moving picture icon image may be changed in regards to every icon, may be changed in regards to individual icons depending upon the background, or may cause a plurality of icons to be commonly changed.

### (Constitution)

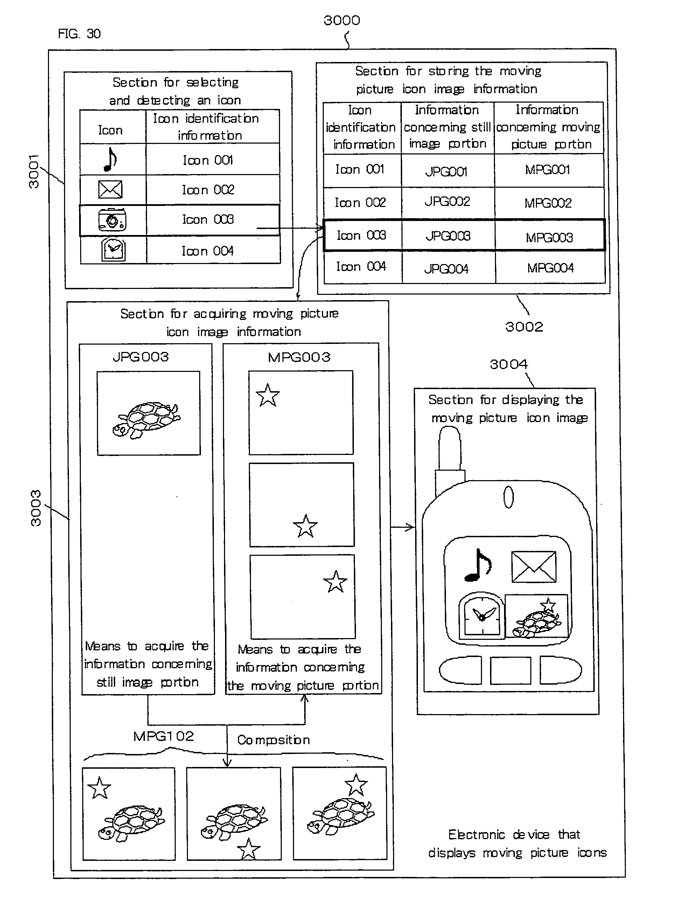

An example of a functional block diagram of the embodiment is shown in FIG. 30. One item of the information concerning the moving picture portions held by the "section for storing the moving picture icon image information" (3002) relates to a plurality of items of icon identification information. All the icon identification information held by the electronic device that displays moving picture icons may be related to one item of information concerning the moving picture portion, or some icon identification information held by the electronic device that displays moving picture icons may be related to one item of information concerning the moving picture portion. As for the example of FIG. 9, the icon identification information indicated by icons 001-003 is related to the information concerning the moving picture portion indicated by MPG003. And the icon identification information indicated by icon 004 is related to the information concerning the moving picture portion indicated by MPG004. The information concerning the moving picture portion indicated by MPG003 may be related to all the icon identification information (icon 001-004).

Other structures are the same as those of the fifth embodiment.

### (Processing flow)

The process flow of the sixth embodiment is omitted because it is the same as that of the fifth embodiment.

### (Effect)

In the sixth embodiment, use of the information concerning the moving picture portion commonly for a plurality of icons can more surely convey to a user the fact that the corresponding icon is selected. That is to say, in order for a user to store within memory one item of information concerning the moving picture portion that shows that the icon is selected, when the moving picture corresponding to such the information concerning the moving picture portion is displayed, a user automatically can tell that the icon is selected. Additionally, since a single item of information concerning the moving picture portion is used for a plurality of icons, the amount of stored information concerning the moving picture portion can be decreased, and the storage capacity of the electronic device can be preserved.

### (Seventh embodiment)

### (Concept)

The seventh embodiment relates to the electronic device that displays moving picture icons that can end display of the moving picture icon when the electronic device obtains some information, so as to suspend display of the moving picture icon. In addition, in such case, at the time of suspension, a single icon alone may be displayed, or suspension may apply while some moving picture icons (for example, a last screen) are being displayed.

### (Constitution)

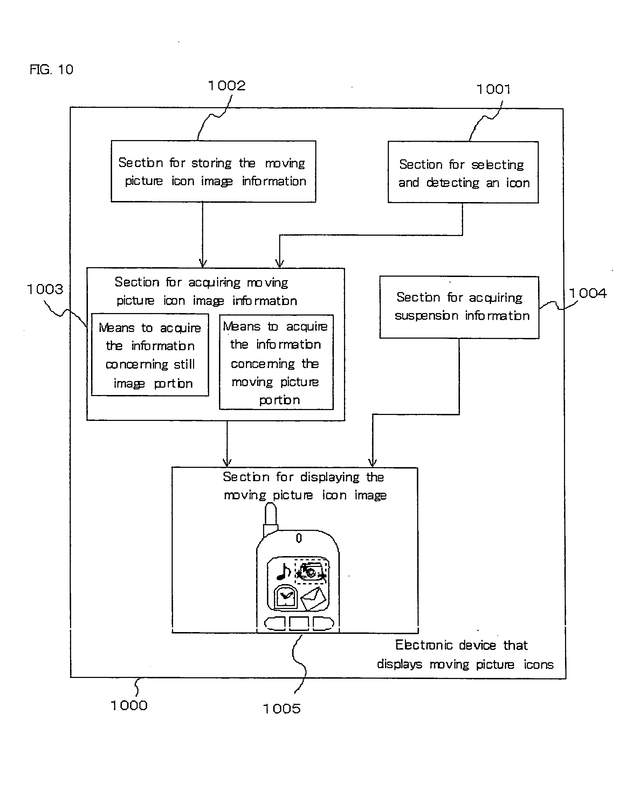

An example of a functional block diagram of the seventh embodiment is shown in FIG. 10. The "electronic device that displays moving picture icons" (1000) comprises the "section for selecting and detecting an icon" (1001), the "section for storing the moving picture icon image information" (1002), the "section for acquiring moving picture icon image information" (1003), the "section for acquiring suspension information" (1004), and the "section for displaying the moving picture icon image" (1005). Furthermore, the "section for acquiring moving picture icon image information" (1003) comprises the "means to acquire the information concerning still image portion" (1006) and the "means to acquire the information concerning the moving picture portion" (1007).

When the suspension information is obtained, the "section for acquiring suspension information" (1004) performs transactions so as to suspend display of the moving picture icon image that has been displayed by the "section for displaying the moving picture icon image" (1005). After display of the moving picture icon image is suspended, the still image prior to detection of the selection of icon and one scene of a still image from among the items of moving picture icon image information or the like are displayed on the screen. The "section for acquiring suspension information" (1004) obtains the resumption information after obtaining the suspension information, and the moving picture icon image may be displayed again. Other constitutions are the same as those of the sixth embodiment.

### (Processing flow)

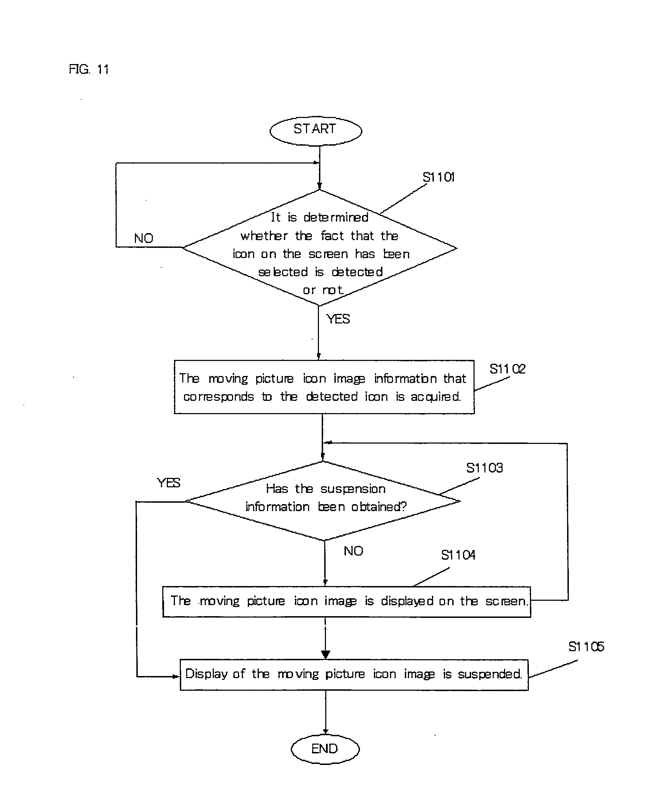

FIG. 11 shows an example of the process flow of the seventh embodiment. The method of operation of the electronic device that displays moving picture icons of the embodiment comprises the steps shown as below.

The step for selecting and detecting an icon (S1101) and the step for acquiring the moving picture icon image information (S1102) are the same as those of the first embodiment. Furthermore, while the moving picture icon image is being displayed on the screen, whether the "section for acquiring suspension information" (1004) has obtained the suspension information or not is determined (S1103). When the suspension information is obtained, displaying of the moving picture icon image is suspended (S1105). When the suspension information is not obtained, the moving picture icon image is displayed as it is (S 1104). Upon display of the moving picture icon image on the screen, when the suspension information is obtained, display of the moving picture icon image is suspended. Acquisition of the suspension information is performed, for example, after a certain period of time has elapsed following commencement of display of the moving picture icon image, or when a user selects another icon.

### (Effect)

According to the embodiment, even when an icon is selected, displaying of the moving picture icon image can be suspended according to the circumstances. And neither excessive memory nor electric power will be wasted.

### (Eighth embodiment)

### (Concept)

The eighth embodiment relates to the electronic device that displays moving picture icons that suspends display of the moving picture icon when the electronic device enters a power-saving mode. Of course, even when the device enters a power-saving mode, the screen does not completely become dark and may be dimly identifiable in some cases. Thus, the moving picture icon may be kept operating.

### (Constitution)

An example of a functional block diagram of the eighth embodiment is explained with reference to FIG. 10.

In the embodiment, when the "electronic device that displays moving picture icons" (1000) enters a power-saving mode, the "section for acquiring suspension information" (1004) obtains the suspension information. Other constitutions are the same as those of the seventh embodiment. A power-saving mode means a condition where the screen of a cellular phone, etc. becomes dark when a user does not operate such phone for a certain period of time, for the purpose of saving electric power. The suspension information may be obtained simultaneously with entry into the power-saving mode, or may be obtained immediately prior to entering such power-saving mode.

### (Processing flow)

The process flow of the embodiment is omitted because it is the same as that of the seventh embodiment.

### (Effect)

In the embodiment, during implementation of a power-saving mode, display of the moving picture icon image can be suspended, and power saving can be more efficiently realized in regards to the electronic device.

### (Ninth embodiment)

### (Concept)

The ninth embodiment relates to the electronic device that displays moving picture icons regarding which movement of a moving picture icon continues for a prescribed time.

### (Constitution)

An example of a functional block diagram of the ninth embodiment is the same as that of FIG. 10. The "section for displaying the moving picture icon image" (1005) moves and displays the moving picture icon image information acquired through the "section for acquiring moving picture icon image information" (1003). That is to say, when the moving picture disappears, the original stationary image of the moving picture is again displayed on the screen. For example, in case that the moving picture icon image information comprises 5 still images of image 1 through image 5, image 1 through image 5 are sequentially displayed on the screen, and image 1 is then displayed again after image 5. And in order to repeat such operation, the moving picture is displayed on the screen until the suspension information is obtained.

### (Processing flow)

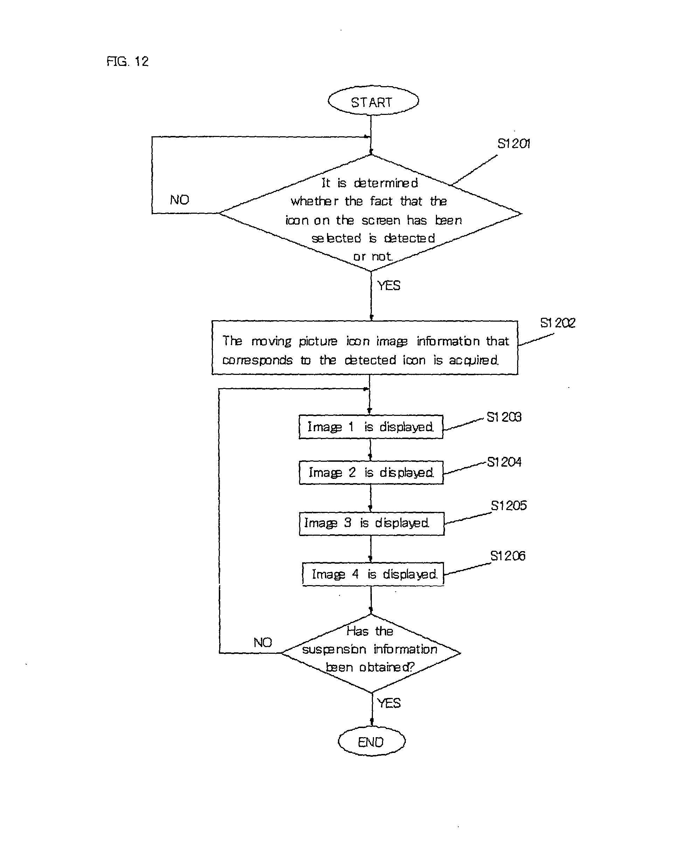

FIG. 12 shows one process flow of the ninth embodiment. The method of operation of the electronic device that displays moving picture icons of the embodiment is based on the steps described below. The step of selecting and detecting the icon (S1201) and the step of acquiring the moving picture icon image information (S1202) are the same as those of the first embodiment. Here, the moving picture icon image information comprises 5 still images of image 1 through image 5. And the images are displayed on the screen sequentially from image 1 (S1203 - S1207). After end of display of image 5, the image 1 is displayed again, and such operation is repeated. In addition, when the suspension information is obtained during display of the image, display of the image can be suspended even in any of steps S1203 through S1207.

### (Effect)

In regards to the ninth embodiment, movement and display of the moving picture can allow for display of the moving picture on the screen at all times, even when the number of images of the moving picture is less. Movement and display of the moving picture can reduce the capacity used for moving pictures and allow conservation of the storage capacity of the electronic device.

### (Tenth embodiment)

### (Concept)

The tenth embodiment relates to the electronic device that displays moving picture icons where the aforementioned electronic device is a cellular phone, based on the first though the ninth embodiments.

### (Constitution)

An example of a functional block diagram of the tenth embodiment is the same as that of FIG. 10. In regards to the embodiment, the "electronic device that displays moving picture icons" (1000) is a cellular phone.

### (Processing flow)

The process flow of the embodiment is omitted because it is the same as that of the ninth embodiment.

### (Effect)

The screen of a cellular phone is small, and it is difficult for a user to discern which icon has been selected. Thus, based on the first through ninth embodiments, display of the moving picture icon image on the screen can solve such problem.

### (Eleventh embodiment)

### (Outline)

The eleventh embodiment is explained. The embodiment relates to a mobile terminal device that processes icon image information that corresponds to the icon whose selection is detected and consecutively displays icon images based on such new icon image information.

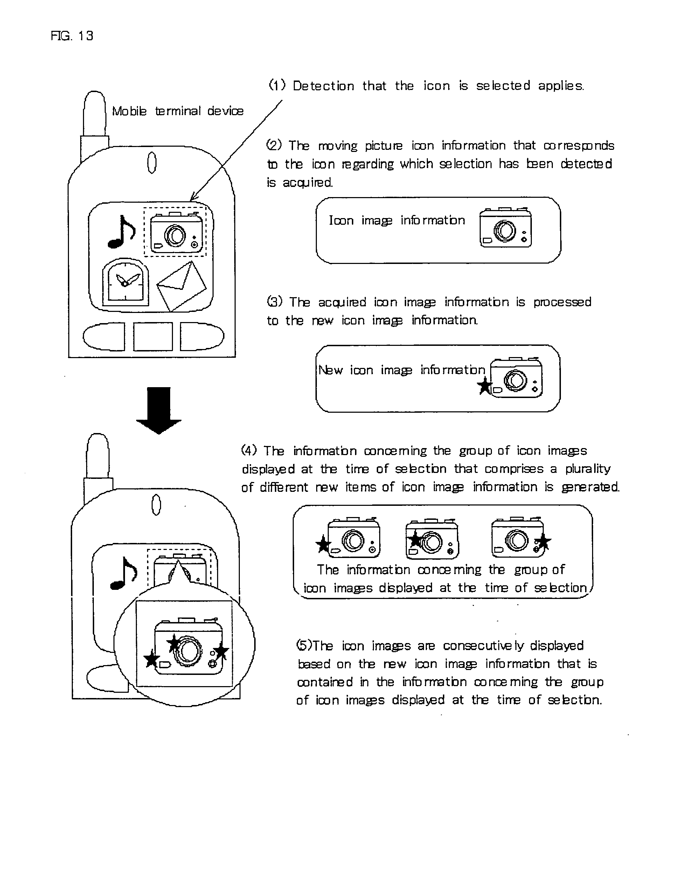

FIG. 13 shows one example of a conceptual diagram of the embodiment. Four icons are displayed on the screen of the mobile terminal device shown by the diagram. Hypothetically, at this point, a user operates a button of the mobile terminal device and selects the icon of a camera located at the top right. The mobile terminal device detects that the icon has been selected (1). From among 4 items of icon image information stored by the mobile terminal device, the mobile terminal device obtains icon image information concerning the icon of the camera based on the icon whose selection is detected (2). Subsequently, the acquired icon image information is processed into new icon image information (3). Here, in regards to the image of the camera as an original icon, an image regarding brightness and indicated by stars is added. Due to this, processing causes new icon image information. Furthermore, the information concerning the group of icon images displayed at the time of selection that comprises a plurality of items of different new icon image information is generated (4). And the icon images are consecutively displayed based on the new icon image information that is contained among the generated information concerning the group of icon images displayed at the time of selection (5). A visual effect whereby the selected icon sparkles is obtained.

In addition, the new icon image information acquired through processing of the original icon image information or the information concerning the group of icon images displayed at the time of selection that comprises a plurality of items of new icon image information is not stored inside the mobile terminal device. Thus, memory is not wasted.

### (Constitution)

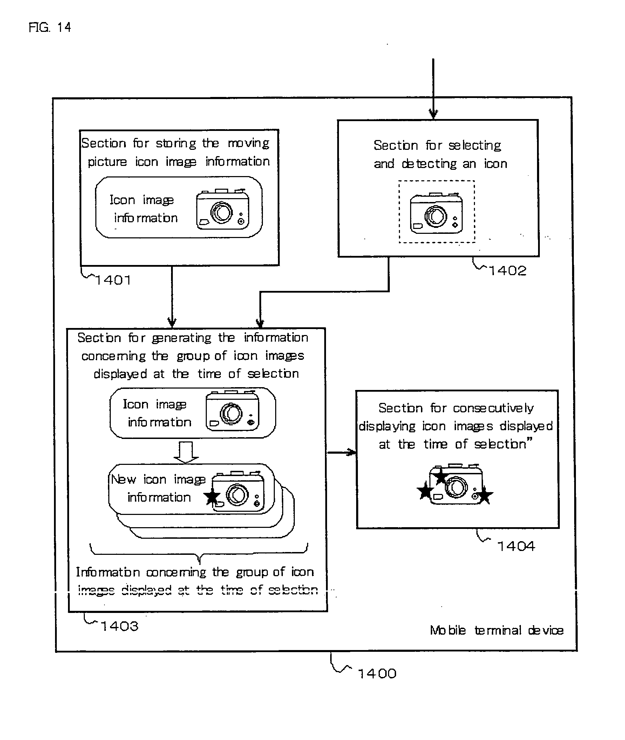

One of the exampled of a functional block diagram of the eleventh embodiment is shown in FIG. 14.
The "mobile terminal device" (1400) of the embodiment displayed in FIG. 14 comprises the "section for storing the moving picture icon image information" (1401), the "section for selecting and detecting an icon" (1402), the "section for generating the information concerning the group of icon images displayed at the time of selection" (1403), and the "section for consecutively displaying icon images displayed at the time of selection" (1404).

The "section for storing the moving picture icon image information" (1401) stores image information concerning the icon that should be displayed on the aforementioned screen. The icon represents the subject matter or content of transactions via denotation, etc. As for the example mentioned above, an image of a camera applies. Display of the image of the icon can be realized based on files in jpg, gif, and other formats. Additionally, the image information concerning the icon corresponds to the information necessary so as to display the image of the icon on the screen. Here, what is stored in the section for storing the moving picture icon image information is the only icon image information concerning four icons according to the aforementioned example. And the new icon image information that is acquired through processing is not stored.

The "section for selecting and detecting an icon" (1402) detects that the aforementioned icon on the screen is selected. A user operates a button of the mobile terminal device, and when such user selects one of the icons, it is possible to detect which icon has been selected.

The "section for generating the information concerning the group of icon images displayed at the time of selection" (1403) acquires and processes the icon image information that corresponds to the icon whose selection is detected through the section for selecting and detecting an icon (1402) from the section for storing the moving picture icon image information (1401), and generates information concerning the group of icon images displayed at the time of selection. The "information concerning the group of icon images displayed at the time of selection" is information composed of a plurality of different and new items of the icon image information that is generated through processing of the icon image information. Such information can be displayed as a moving picture in the section for consecutively displaying icon images at the time of selection (1404).

The "section for consecutively displaying icon images displayed at the time of selection" (1404) consecutively displays the icon images based on new icon image information included among the information concerning the group of icon images displayed at the time of selection that was generated via the aforementioned section for generating the information concerning the group of icon images displayed at the time of selection (1403). Due to this, for example, accompanying an image of luminance as indicated by stars with respect to the selected icon, a sparking effect can be displayed as a moving picture. Here, in regards to an image of luminance as indicated by stars, a sparking effect can be expressed as a moving picture through display of an image in relation to the large portion for luminance. Details concerning this matter are explained in the nineteenth embodiment.

### (Processing flow)

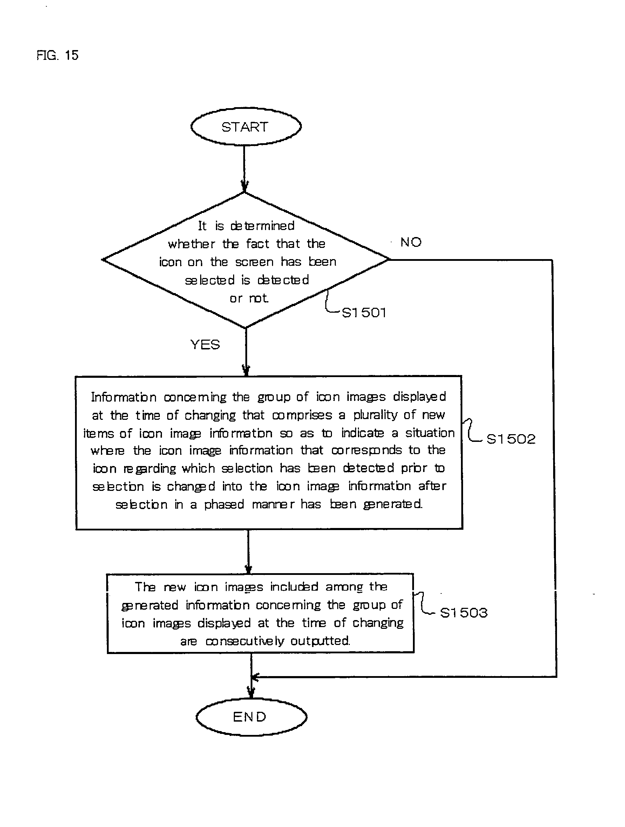

FIG. 15 shows an example of a process flow of the eleventh embodiment. The method of operation concerning the mobile terminal device that has the section for storing icon image information storing the icon image information that should be displayed on the screen comprises the steps explicated below.

First of all, the transactions used for detecting that the aforementioned icon has been selected on the screen (the step for selecting and detecting the icon S1501) are performed. At this time, whether detection has taken place or not is determined. In case that a judgment results that detection has taken place, the following steps are processed. And in case that it is the result of such judgment that detection has not taken place, the processes may be ended.

Subsequently, the icon image information that corresponds to the icon whose selection has been detected through the step for selecting and detecting the icon (S1501) is obtained from the aforementioned section for storing icon image information, is processed, and the information concerning the group of icon images displayed at the time of selection that comprises a plurality of different new items of icon image information is generated (the step for generating the information concerning the group of icon images displayed at the time of selection (S1502)). Finally, the new icon image included in the information concerning the group of icon images displayed at the time of selection that is generated through the step for generating the information concerning the group of icon images displayed at the time of selection (S 1502) is consecutively outputted (the step for consecutively displaying the icon images displayed at the time of selection (S1503)).

The aforementioned processes can be executed by an executable program by the computer. Additionally, it is possible for such program to be recorded in readable recoding media via a computer (and the same applies throughout the entire specification).

### (Effect)

The eleventh embodiment relates to a mobile terminal device that processes icon image information that corresponds to an icon whose selection has been detected and which consecutively displays icon images based on such new image information. Some display screens of the mobile terminal devices are small, and it may be difficult to see which icon has been selected. However, according to the mobile terminal device of this embodiment, display is made accompanying a visual effect where the icon that has been selected sparkles. Thus, it is easy to use such device. Moreover, the new icon image information resulting after processing is not stored in the mobile terminal device. Thus, display of the moving picture can be realized without consuming large amounts of the memory of the mobile terminal device, which is efficient.

### (Twelfth embodiment)

### (Outline)

Next, the twelfth embodiment is explained. In regards to the mobile terminal device of this embodiment, the information concerning the group of icon images displayed at the time of selection is sequentially generated for each instance of display of the icon image and is deleted after the display thereof.

### (Constitution)

An example of a functional block diagram of the twelfth embodiment is the same as that treated in FIG. 14.

The "mobile terminal device" (1400) of the embodiment shown in FIG. 14 comprises the "section for storing icon image information" (1401), the "section for selecting and detecting an icon" (1402), the "section for generating the information concerning the group of icon images displayed at the time of selection" (1403), and the "section for consecutively displaying icon images displayed at the time of selection" (1404).

The "section for generating the information concerning the group of icon images displayed at the time of selection" (1403) sequentially generates the information concerning the group of icon images displayed at the time of selection (1403) for each instance of display through the section for consecutively displaying icon images displayed at the time of selection (1404), and deletes the same after the display thereof.

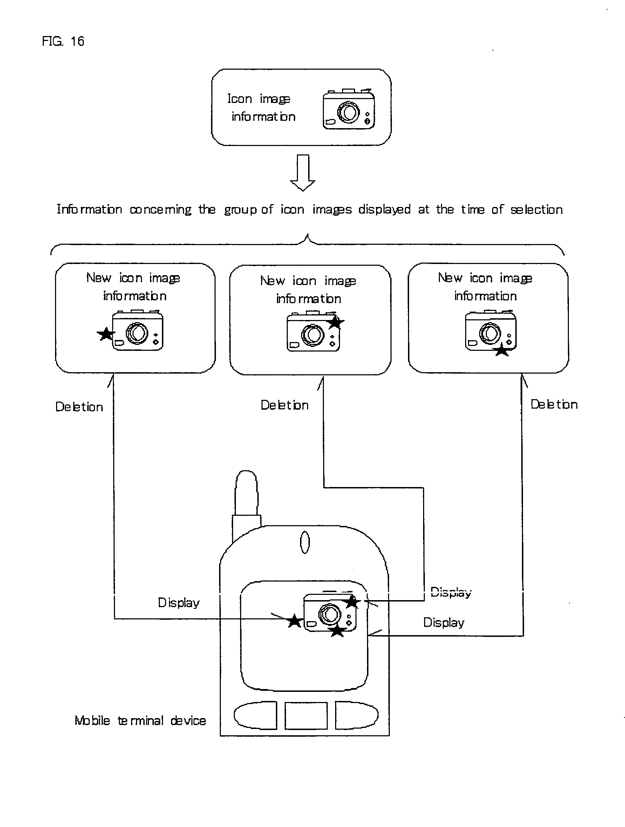

FIG. 16 shows an example relating to the information concerning the group of icon images displayed at the time of selection, and such information is deleted after the display thereof. Since the information concerning the group of icon images displayed at the time of selection is deleted after the end of the display thereof, display of the moving picture can be realized through the section for consecutively displaying icon images displayed at the time of selection (1404) without consuming large amounts of the memory of the mobile terminal device. Processes relating to the sections are the same those of the eleventh embodiment.

### (Effect)

In regards to the mobile terminal device of this embodiment, the information concerning the group of icon images displayed at the time of selection is sequentially generated for each instance of display of the icon image and is deleted after the display thereof. After the end of display thereof, the information concerning the group of icon images displayed at the time of selection is deleted, and it is not stored in the mobile terminal device. Thus, display of the moving picture can be realized without consuming large amounts of the memory of the mobile terminal device, which is efficient. Moreover, display of the moving picture can be realized based on a single item of icon image information. Thus, it is possible for a user to use an image shot thereby, to generate an original icon, and to display the same as a moving picture. Therefore, it can be said that there exists vital use of an additional function of the mobile terminal device.

### (Thirteenth embodiment)

### (Outline)

Next, the thirteenth embodiment is explained. In regards to the mobile terminal device of the embodiment, partial processing is performed in relation to an icon whose selection has been detected.

### (Constitution)

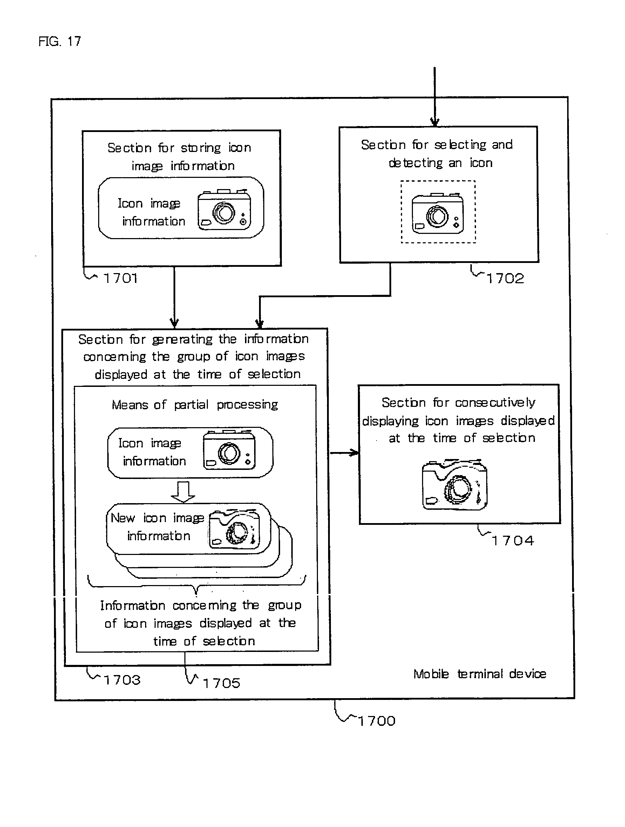

An example of a functional block diagram of the thirteenth embodiment is shown in FIG. 17.

The "mobile terminal device" (1700) of the embodiment as shown in FIG. 17 comprises the "section for storing icon image information" (1701), the "section for selecting and detecting an icon" (1702), the "section for generating the information concerning the group of icon images displayed at the time of selection" (1703), and the "section for consecutively displaying icon images displayed at the time of selection" (1704). Furthermore, the "section for generating the information concerning the group of icon images displayed at the time of selection" (1703) contains the "means of partial processing" (1705).

The "means of partial processing" (1705) performs partial processing of an icon whose selection has been detected through the "section for selecting and detecting an icon" (1702). "Partial processing" means a change of color or luminance or addition of image in regards to a part of an icon, and can result in the display of a sparkling icon and of a circular ripple pattern. In FIG. 17, processing that realizes a display in which a circular ripple spreads out in regards to the icon is shown. Forming of a circular ripple pattern is explained in details presented in the twenty-first embodiment. Processes relating to other parts are the same as those of the eleventh and twelfth embodiments.

### (Effect)

In regards to the mobile terminal device of this embodiment, partial processing is performed in relation to an icon whose selection has been detected. Undertaking of partial processing in regards to a part of an icon can realize display of a moving picture with more natural movements than those in a case in which processing is performed for the entire icon. Moreover, the portions for which processing is performed are limited, which imposes less of a burden on processing in regards to the mobile terminal device and which can speed up the processing thereof.

### (Fourteenth embodiment)

### (Outline)

Next, the fourteenth embodiment is explained. In the applicable mobile terminal device of this embodiment, processing is performed in relation to the icon image information that does not correspond to the icon whose selection has been detected, and the icon image is consecutively displayed based on such new icon image information.

### (Constitution)

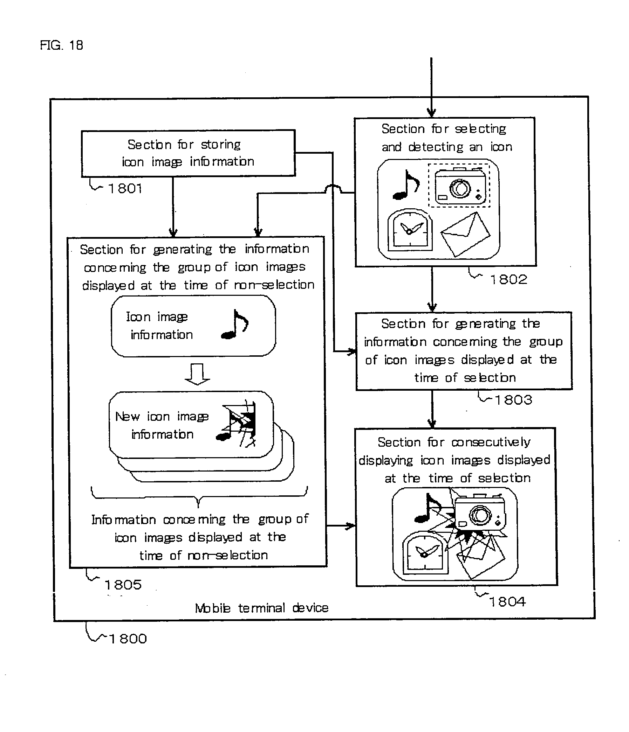

An example of a functional block diagram of the fourteenth embodiment is shown in FIG. 18.

The "mobile terminal device" (1800) of the embodiment shown in FIG. 18 comprises the "section for storing icon image information" (1801), the "section for selecting and detecting an icon" (1802), the "section for generating the information concerning the group of icon images displayed at the time of selection" (1803), and the "section for consecutively displaying icon images displayed at the time of selection" (1804). Furthermore, it also comprises the "section for generating the information concerning the group of icon images displayed at the time of non-selection" (1805).

The "section for generating the information concerning the group of icon images displayed at the time of non-selection" (1805) obtains and processes icon image information that does not correspond to an icon whose selection has been detected through the "section for selecting and detecting an icon" (1802) from the "section for storing icon image information" (1801) and generates information concerning the group of icon images displayed at the time of non-selection that comprises a plurality of different new items of icon image information. In case that the selection concerning an icon of a camera is detected, an icon regarding musical notes, letters, or a clock other than that of the camera is obtained from the section for storing icon image information, and a wide variety of processing is undertaken. For example, in case that the selected icon of a camera is displayed with a sparkling effect, the icon of musical notes adjacent thereto receives a ray discharged by the icon of camera in some cases. However, in order to generate a plurality of the new items of icon image information that can display such embodiment, processing takes place whereby a change is made in regards to the icon image of the original musical notes receiving a ray.

The generated information concerning the group of icon images displayed at the time of non-selection as well as the information concerning the group of icon images displayed at the time of selection generated through the section for generating the information concerning the group of icon images displayed at the time of selection (1803) may be displayed at the section for consecutively displaying icon images displayed at the time of selection (1804). The processes of other sections are the same as those of the eleventh through the thirteenth embodiments.

### (Effect)

The fourteenth embodiment relates to a mobile terminal device that processes icon image information that does not correspond to the icon whose selection has been detected and that consecutively displays icon images based on such new icon image information. It is possible to process the image in regards to the selected icon, as well as in regards to the icon that has not been selected. Due to this, variations concerning display of the moving pictures accompanying the selection of an icon are enhanced and the selected icon can be further emphasized.

### (Fifteenth embodiment)

### (Outline)

Next, the fifteenth embodiment is explained. In the mobile terminal device of this embodiment, when selection is detected, display of the background image information that constructs the background can be changed.

### (Constitution)

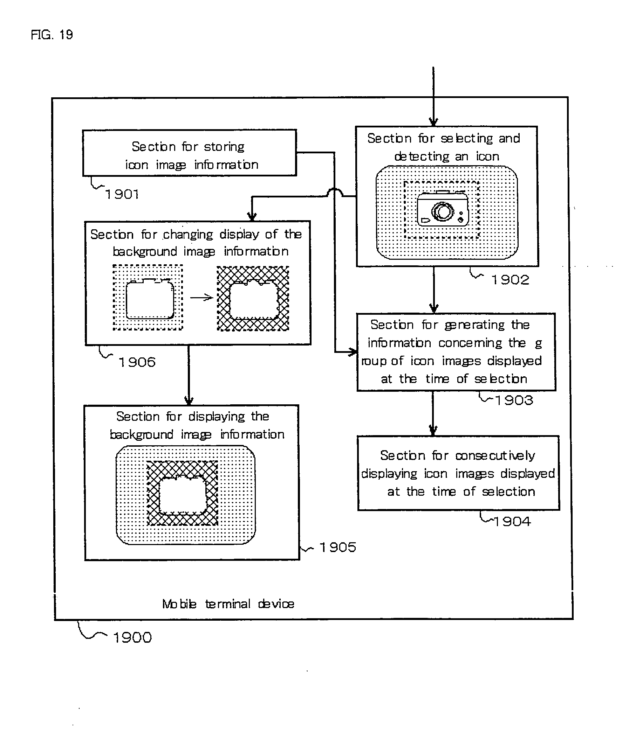

An example of a functional block diagram of the fifteenth embodiment is shown in FIG. 19. FIG. 19 is based on FIG. 14 of the eleventh embodiment.

The "mobile terminal device" (1900) of the embodiment shown in FIG. 19 comprises the "section for storing icon image information" (1901), the "section for selecting and detecting an icon" (1902), the "section for generating the information concerning the group of icon images displayed at the time of selection" (1903), the "section for consecutively displaying icon images displayed at the time of selection" (1904), and furthermore, the "section for displaying the background image information" (1905), and the "section for changing display of the background image information" (1906).

The "section for displaying the background image information" (1905) displays the background image information. The "background image information" relates to an image that provides the structure of the background as the portion that does not display the aforementioned icon on the screen. In FIG. 19, the image that provides the structure of the background in the beginning is indicated d by polka dots.

The "section for changing display of the background image information" (1906) changes displaying of the aforementioned "section for displaying the background image information" (1905) when the selection is detected through the aforementioned section for selecting and detecting an icon (1902). Now, if the selection concerning the icon of camera is detected, a change is added to the background image information, and the image that provides the structure of the background is changed. Here, due to selection of the icon, a scene where the background image is changed so as to have a checked pattern is shown. In addition, FIG. 19 shows the embodiment where only the background image in the peripheral area of the icon is changed. However, there are some cases in which the entire background on the screen may change. Additionally, the icon image itself is displayed through the section for consecutively displaying icon images displayed at the time of selection (1904) based on the new icon image information. Thus, in regards to a part (or a whole) of the screen where the icon and background are combined, based on the detection of selection of the icon, display may be changed. Processes of other sections are the same as those of the first through the fourth embodiments.

### (Effect)

The fifteenth embodiment relates to a mobile terminal device that the display of the background image information that provides the structure of the background is changed when selection is detected. It is possible to process the image in regards to the selected icon as well as in regards to the background image. Due to this, variations concerning displaying of the moving picture accompanying the selection of icon are enhanced and the selected icon can be further emphasized.

### (Sixteenth embodiment)

### (Outline)

Next, the sixteenth embodiment is explained. In the mobile terminal device of this embodiment, a whole or a part of the icon color information that relates to the color of an icon is changed from among the icon image information that corresponds to the detected icon.

### (Constitution)

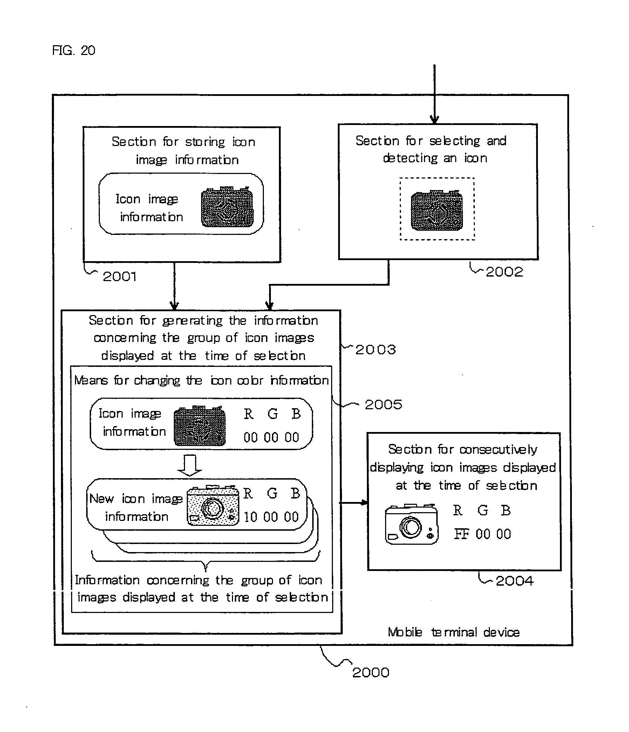

An example of a functional block diagram of the sixteenth embodiment is shown in FIG. 20. FIG. 20 is based on FIG. 14 of the eleventh embodiment.

The "mobile terminal device" (2000) of the embodiment shown in FIG. 20 comprises the "section for storing icon image information" (2001), the "section for selecting and detecting an icon" (2002), the "section for generating the information concerning the group of icon images displayed at the time of selection" (2003), and the "section for consecutively displaying icon images displayed at the time of selection" (2004). And furthermore, the "section for generating the information concerning the group of icon images displayed at the time of selection" (2003) comprises the "means for changing the icon color information" (2005).

From among the icon image information that corresponds to the aforementioned icon whose selection has been detected, the "means for changing the icon color information" (2005) changes a whole or a part of the icon color information as the information relating to the color of an icon. It is assumed that the icon color information is displayed through the use of lights of the three colors of R (red), G (green), and B (blue). In case that the icon that was black prior to selection is changed to be red based on a selection, the icon color information can be changed to the red color information (RGB: FF0000) through increasing of values of the R constituent concerning the black color information (RGB: 0000). Changing a whole or a part of the icon color information can allow for the realization of various colors.

Additionally, changing of the icon color information concerning a part of the icon image can change the icon image in a variety of manners. For example, gradual change of color darkness and lightness in a circular manner can realize the embodiment such that a circular ripple pattern spreads out in regards to the icon. Details concerning this matter are explained in regards to the twenty-first embodiment.

Processes of other sections are the same as those of the eleventh embodiment through the fifteenth embodiment.

### (Effect)

In regards to the mobile terminal device of the sixteenth embodiment, from among the icon image information that corresponds to a detected icon, a whole or a part of the icon color information as information showing the color of an icon is changed. Due to this, variations concerning the display of a moving picture accompanying selection of an icon can be enhanced, and the selected icon can be further emphasized.

### (Seventeenth embodiment)

### (Outline)

Next, the seventeenth embodiment is explained. In regards to a mobile terminal device of this embodiment, from among the icon image information that corresponds to a detected icon, a whole or a part of the icon luminance information as the information showing the luminance of an icon is changed.

### (Constitution)

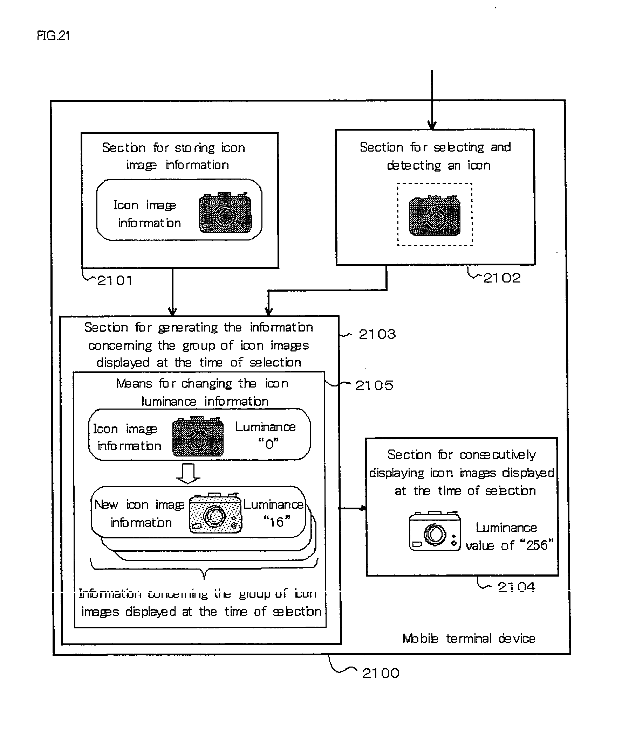

An example of a functional block diagram of the embodiment is shown in FIG. 21. FIG. 21 is based on FIG 14 of the eleventh embodiment.

The "mobile terminal device" (2100) of the embodiment shown in FIG. 21 comprises the "section for storing icon image information" (2101), the "section for selecting and detecting an icon" (2102), the "section for generating the information concerning the group of icon images displayed at the time of selection" (2103), and the "section for consecutively displaying icon images displayed at the time of selection" (2104). And furthermore, the "section for generating the information concerning the group of icon images displayed at the time of selection" (2103) comprises the "means for changing the icon luminance information" (2105).

From among the icon image information that corresponds to the aforementioned icon whose selection has been detected, the "means for changing the icon luminance information" (2105) changes a whole or a part of the icon luminance information as the information showing the luminance of an icon. The icon luminance information is the information showing the degree of luminance. Additionally, when the icon color information is displayed through the use of the three primary "RGB" colors, the icon luminance information can be also shown based on the total values of each element shown by such RGB. In case that an icon that has been black (color information: RGB=000000) prior to a selection is changed into a bright color based on such selection, the value of the icon luminance information is changed so that luminance increases. The luminance information of black is "0." However, when the value of such color is changed to "256," the color becomes red, and display of a brighter color than black can be realized. Additionally, changing of the icon luminance information concerning a part of the icon image can change the icon image in various manners. For example, a portion whose luminance is high is established in a random manner and the luminance is reduced in a radial pattern. Due to this, a sparkling effect in the embodiment can be realized. Details concerning this matter are explained in regards to the ninth embodiment.

Processes of other sections are the same as those of the eleventh through the fifteenth embodiments.

### (Effect)

In regards to the mobile terminal device of the seventeenth embodiment, from the icon image information that corresponds to a detected icon, a whole or a part of the icon luminance information as the information showing the luminance of the icon is changed. The luminance of the selected icon image can be changed. Due to this, variations concerning the display of a moving picture accompanying selection of an icon can be enhanced and the selected icon can be further emphasized.

### (Eighteenth embodiment)

### (Outline)

Next, the eighteenth embodiment is explained. In regards to a mobile terminal device of this embodiment, icon image information is obtained, and the obtained icon image information is stored in the section for storing icon image information.

### (Constitution)

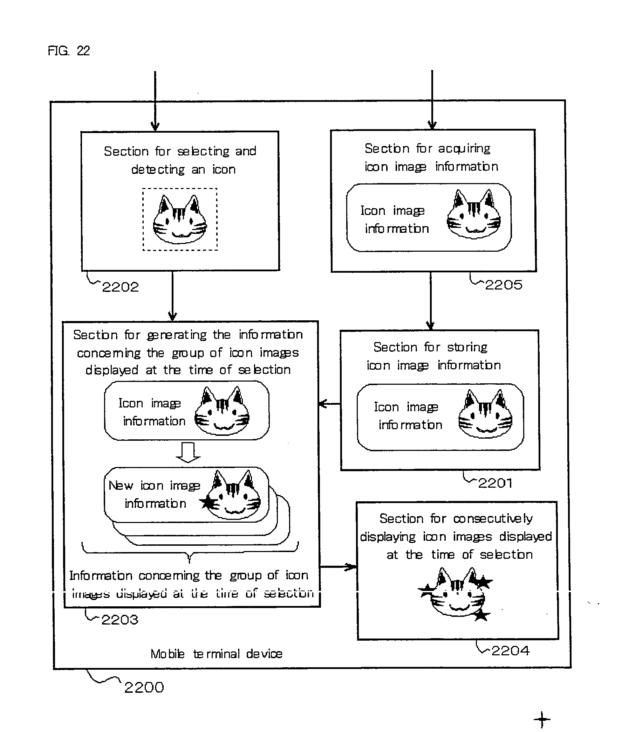

An example of a functional block diagram of the eighteenth embodiment is shown in FIG. 22. FIG. 22 is based on FIG. 14 of the eleventh embodiment.

The "mobile terminal device" (2200) of the embodiment shown in FIG. 22 comprises the "section for storing icon image information" (2201), the "section for selecting and detecting an icon" (2202), the "section for generating the information concerning the group of icon images displayed at the time of selection" (2203), the "section for consecutively displaying icon images displayed at the time of selection" (2204), and furthermore, the "section for acquiring icon image information" (2205).

The "section for acquiring icon image information" (2205) obtains icon image information as the information that displays an icon. It can be assumed that the icon image can be obtained through the shooting thereof by a camera function furnished with a mobile terminal device, through the generation thereof based on the use of functions of the mobile terminal device, and through reception of email to which the image is attached, etc. The icon image information is obtained so as to display the icon based on such images. FIG. 22 shows the example of a cat shot by a camera as an icon image. Hypothetically, a cat is photographed. The icon image information obtained through the image of such cat is the icon image information, and such icon image information is stored in the "section for storing icon image information" (2201). During the normal time when the icon has not been selected, on the screen of the mobile terminal device, the cat icon is displayed together with other icons. When the selection of the cat icon is detected by the section for selecting and detecting an icon (2202), the icon image information concerning the cat icon is processed through the section for generating the information concerning the group of icon images displayed at the time of selection (2203), and the information concerning the group of icon images displayed at the time of selection that comprises a plurality of items of new icon image information is generated. Due to this, in regards to the section for consecutively displaying icon images displayed at the time of selection (2204), display of a cat icon image with sparkling effects is performed. Processes of other sections are the same as those of the eleventh through the seventeenth embodiment.

### (Effect)

In regards to the mobile terminal device of the eighteenth embodiment, the icon image information used to display the icon is obtained. A user can generate the icon freely through use of the image obtained by the mobile terminal device, and there exists an effect of enhancement of utilization concerning the mobile terminal device without causing a user to become bored with it. Moreover, when the icon is selected, display is performed accompanied by dynamic visual effects. Thus, even if the mobile terminal device has only a small screen, it is easy to determine which icon has been selected.

### (Nineteenth embodiment)

### (Outline)

Next, the nineteenth embodiment is explained. From among the icon images whose selection has been detected, in regards to the embodiment, in the mobile terminal device of this embodiment, the portion with a high degree of luminance is extracted and a *kirakira-mark* is displayed in regards to the extracted item within the icon image.

### (Constitution)

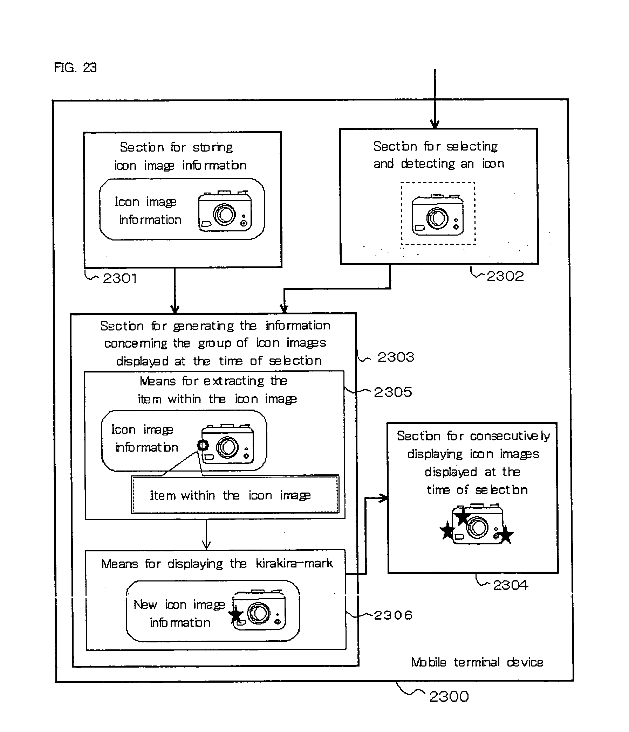

An example of a functional block diagram of the nineteenth embodiment is shown in FIG. 23. FIG. 23 is based on FIG. 14 of the eleventh embodiment. The "mobile terminal device" (2300) of the embodiment shown in FIG. 20 comprises the "section for storing icon image information" (2301), the "section for selecting and detecting an icon" (2302), the "section for generating the information concerning the group of icon images displayed at the time of selection" (2303), and the "section for consecutively displaying icon images displayed at the time of selection" (2304). And furthermore, the "section for generating the information concerning the group of icon images displayed at the time of selection" (2303) comprises the "means for extracting the item within the icon image" (2305) and the "means for displaying the *kirakira-mark"* (2306).

The "means for extracting the item within the icon image" (2305) extracts the portion with a high degree of luminance from among the icon images whose selection has been detected through the "section for selecting and detecting an icon" (2302). It is assumed that the portion with a high degree of luminance is extracted based on the icon luminance information that has been changed in regards to the seventh embodiment. Alternatively, the portion that originally had a high degree of luminance within the icon images (such as a camera lens portion) may be extracted.

The "means for displaying the *kirakira-mark"* (2306) displays the *kirakira-mark* in regards to an item within the icon image extracted through the aforementioned means for extracting the item within the icon image (2305). The *"Kirakira-mark"* means a mark of a certain shape that is superimposed over the selected icon, and corresponds to various marks, such those of as star type, diamond type, radial ray type, or frame type surrounding the icon, etc.

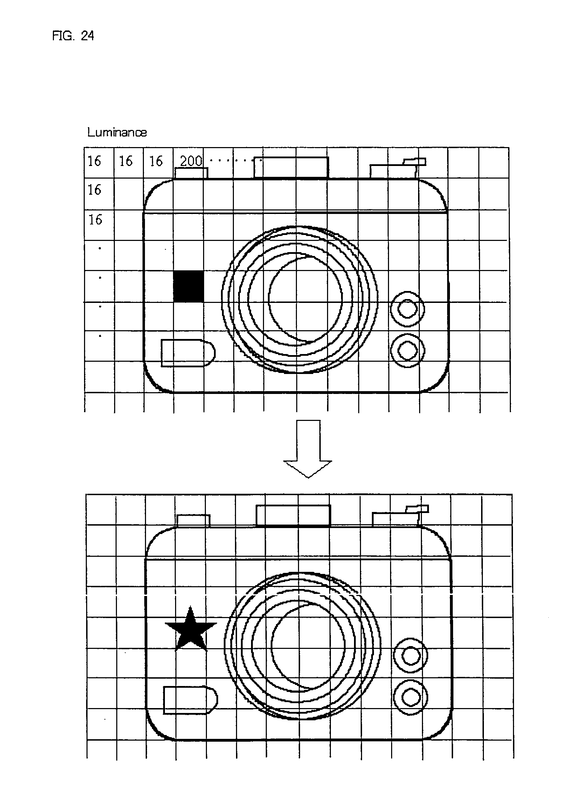

FIG. 24 relates to one example of a process whereby the item within an icon. The upper portion of FIG. 24 relates to processes whereby the value of luminance ("16" or "200" etc. shown in FIG. 24) per icon pixel is computed and the pixel portion with the greatest degree of luminance is determined. There may exist a plurality of pixel portions whose luminance values all represent the greatest degree. In regards to the lower portion of FIG. 24, the processes are shown where a *kirakira-mark* is added to the extracted item within the icon image concerning the pixel portion with the greatest degree of luminance. A center of a *kirakira-mark* is displayed in regards to a pixel with the greatest degree of brightness.

When the luminance is randomly changed, *kirakira-marks* are deleted in accordance with the time of the next step for computing luminance, and the aforementioned processes are repeated. Sequential repetition of the display and deletion of *kirakira-marks* can result in a sparkling icon image. Processes of other sections are the same as those of the eleventh through the eighteenth embodiments.

### (Effect)

In the mobile terminal device of this embodiment, the portion with a high degree of luminance is extracted and a *kirakira-mark* is displayed in regards to the extracted item within the icon image from among the icon images whose selection has been detected, in regards to the nineteenth embodiment. When a *kirakira-mark* is displayed in regards to the portion with a high degree of luminance, such bright portion can be further emphasized, and the sparkling effect can be improved naturally.

### (Twentieth embodiment)

### (Outline)

Next, the twentieth embodiment is explained. In regards to the mobile terminal device of this embodiment, a *kirakira-mark* is transferred from the icon whose selection has been detected most recently to the icon that is currently being selected and will be displayed.

### (Constitution)

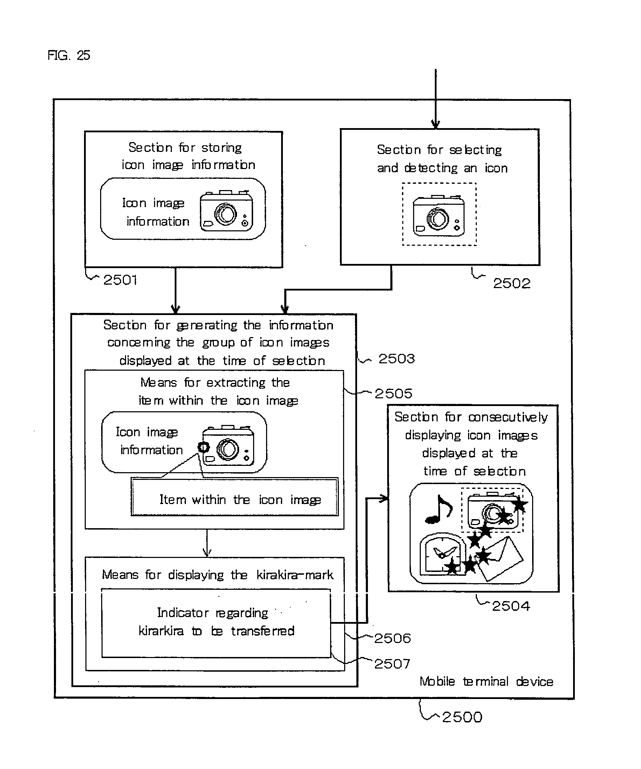

One of a functional block diagram of the twentieth embodiment is shown in FIG. 25.

The "mobile terminal device" (2500) of the embodiment shown in FIG. 25 comprises the "section for storing icon image information" (2501), the "section for selecting and detecting an icon" (2502), the "section for generating the information concerning the group of icon images displayed at the time of selection" (2503), and the "section for consecutively displaying icon images displayed at the time of selection" (2504). And furthermore, the "section for generating the information concerning the group of icon images displayed at the time of selection" (2503) has the "means for extracting the item within the icon image" (2505) and the "means for displaying the kira*kira-mark*" (2506). Moreover, the "means for displaying the kira*kira-mark*" (2506) has the "indicator regarding *kirakira* to be transferred" (2507).

The "indicator regarding *kirakira* to be transferred" (2507) performs processes *whereby a kirakira-mark displayed through the "means for displaying the kirakira-mark"* (2506) is transferred from the icon whose selection has been detected last time through the "section for selecting and detecting an icon" (2502) to the icon whose selection is selected through the "section for selecting and detecting an icon" (2502) this time and is displayed.

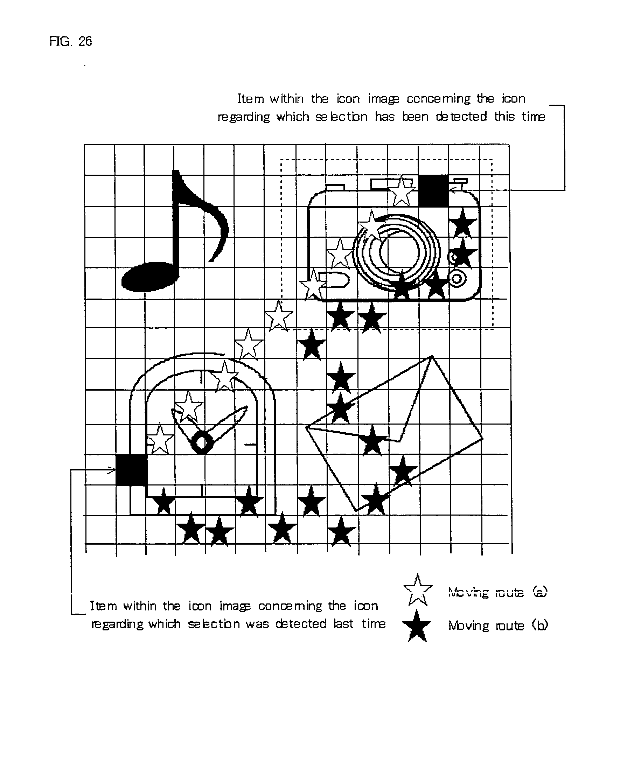

FIG. 26 shows one of the processes whereby the *kirakira-mark* is moving based on a pattern diagram. In regards to the icon whose selection has been detected last time (icon of clock), the *kirakira-mark* is transferred from the item within the icon image regarding which the *kirakira-mark* is displayed to the item within the icon image as the portion with a high degree of luminance within the image concerning the icon (icon of a camera) whose detection has been selected this time. At this time, the route where *kirakira-mark* is moving may be transited linearly (a) or may be transited while *kirakira-mark* is randomly floating.

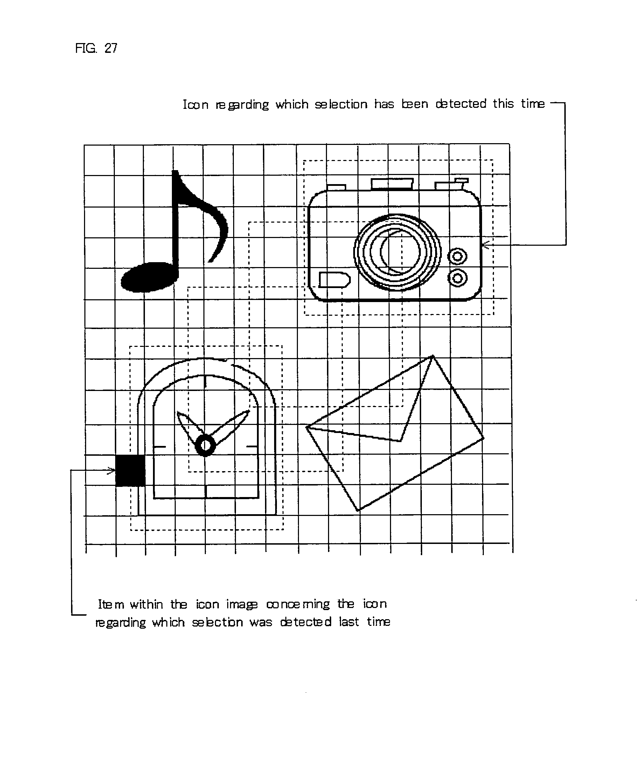

FIG. 27 shows another example of the process whereby a *kirakira-mark* is transferred. It is determined that the icon including the item within the icon image displaying the *kirakira-mark* last time is the icon of clock. And the frame type *kirakira-mark* surrounded by dashed lines as a *kirakira-mark* is moving in regards to the icon of camera whose selection has been detected this time. Processes of other sections are the same as those of the nineteenth embodiment.

### (Effect)

In regards to the mobile terminal device of the twentieth embodiment, the *kirakira-mark* is moving from the icon whose selection has been detected last time to the icon whose selection is selected this time and is displayed. Due to this, the *kirakira-mark* is displayed for a relatively long period of time. Thus, it is easy to determine what icon has been selected.

### (Twenty-first embodiment)

### (Outline)

Next, the twenty-first embodiment is explained. In regards to the mobile terminal device of this embodiment, a circular ripple pattern can be formed in the icon images for which selection is detected.

### (Constitution)

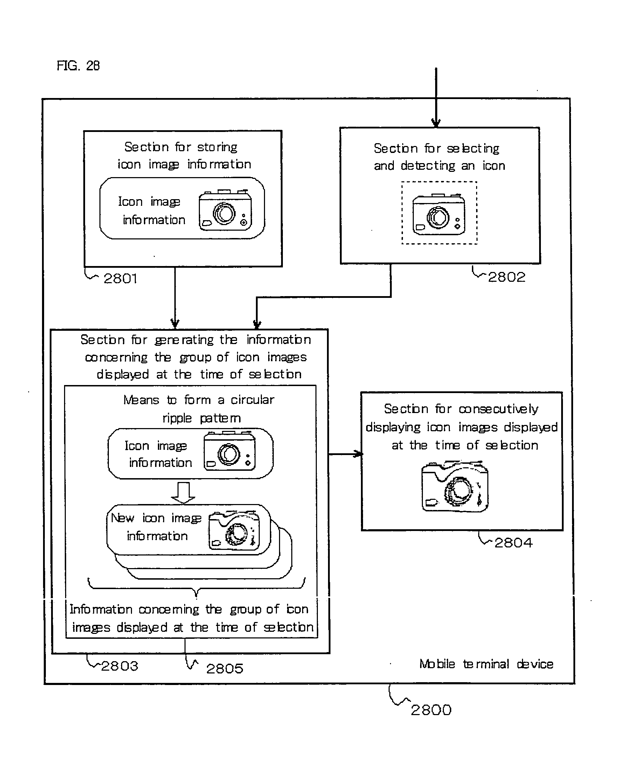

An example of a functional block diagram of the twenty-first embodiment is shown in FIG. 28. FIG. 28 is based on FIG. 14 of the eleventh embodiment.

The "mobile terminal device" (2800) of the embodiment shown in FIG. 28 comprises the "section for storing icon image information" (2801), the "section for selecting and detecting an icon" (2802), the "section for generating the information concerning the group of icon images displayed at the time of selection" (2803), and the "section for consecutively displaying icon images displayed at the time of selection" (2804). And furthermore, the "section for generating the information concerning the group of icon images displayed at the time of selection" (2803) comprises the "means to form a circular ripple pattern"(2805).

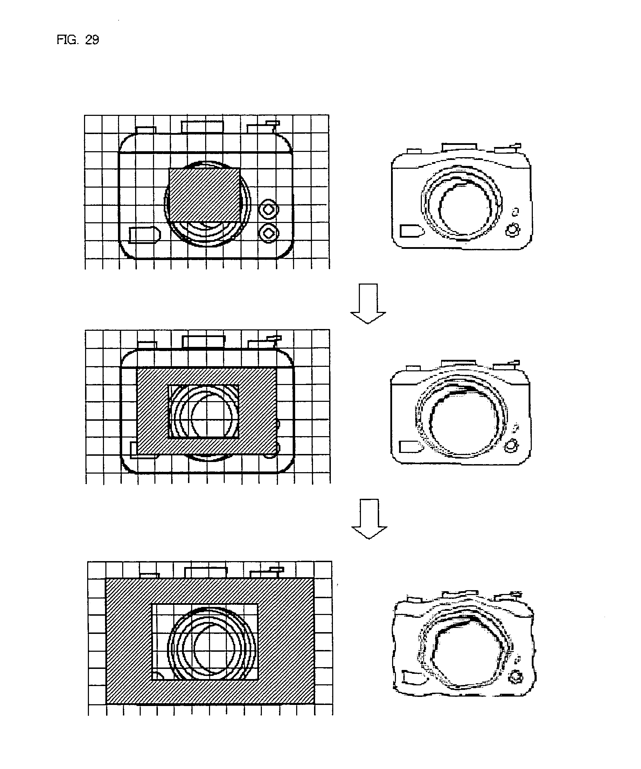

The "means to form a circular ripple pattern" (2805) forms a circular ripple pattern in the icon image whose selection has been detected. FIG. 29 shows one of the examples of display of a circular ripple pattern. For example, changing of the information concerning the darkness and brightness of the color or luminance in regards to the icon image crosshatched by diagonal lines on the left side of FIG. 29 can allow realization of display on the right hand side. When a portion in which the color of the icon image is changed is out in regards to the icon can be realized. Processes of other sections are the same as those of the eleventh through the twentieth embodiments.

### (Effect)

In regards to the mobile terminal device of the twenty-first embodiment, a circular ripple pattern is formed in the image of the icon whose selection has been detected. It is possible to form a circular ripple pattern in regards to the selected icon image. Due to this, variations concerning the display of a moving picture accompanying selection of an icon can be enhanced and the selected icon can be further emphasized.

### (Twenty-second embodiment)

Next, the twenty-second embodiment is explained. In regards to the mobile terminal device of this embodiment, the mobile terminal device has telephone functions.

### (Constitution)

The "mobile terminal device" (2200) of the embodiment shown in FIG. 22 comprises the "section for storing icon image information" (2201), the "section for selecting and detecting an icon" (2202), the "section for generating the information concerning the group of icon images displayed at the time of selection" (2203), the "section for consecutively displaying icon images displayed at the time of selection" (2204), and the "section for acquiring icon image information" (2205). Since the mobile terminal device has telephone functions, exchanging of the icon images can be performed through using communication means such as e-mail, which is derived from telephone functions. If the icon image information can be attached to email, etc., the mail sent by a communicating party can be received and icon image information can be obtained via e-mail through the section for acquiring icon image information (2205).

Processes of other sections are the same as those of the eleventh embodiment through the twenty-first embodiment.

### (Effect)

In regards to the twenty-second embodiment, a mobile terminal device has telephone functions. When exchange of icon images can be performed with other persons through the use of a communication means such as email that is derived from telephone functions, it can be expected that icon variations will be enhanced, and utilization of the mobile terminal device itself will be improved.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An electronic device that displays moving picture icons, comprising:
a screen, on which, while an icon is being selected, the icon continues to move.

2. An electronic device that displays moving picture icons, which displays an icon on a screen, comprising:
a section for detecting a selection of an icon, which detects that the icon on said screen has been selected;
a section for acquiring moving picture icon image information, which acquires icon image information that is related to the icon regarding which selection has been detected by said section for selecting and detecting an icon, and which continues to move while the process of said detection continues; and
a section for displaying a moving picture icon image for displaying the moving icon image information acquired through the section for acquiring moving picture icon image information.

3. The electronic device that displays moving picture icons according to claim 2, further comprising:
a section for storing moving picture icon image information that relates to said moving picture icon image information to the relevant icon identification information and stores the resulting information.

4. The electronic device that displays moving picture icons according to claim 3, wherein a plurality of items of the moving picture icon image information is related to a single piece of icon identification information.

5. The electronic device that displays moving picture icons according to any one of claims 2 to 4, wherein
said section for acquiring moving picture icon image information comprises,
means for acquiring information concerning a still image portion that acquires information concerning the still image portion forming a still image in said moving icon that continues to move, and
means for acquiring information concerning the moving picture portion that acquires information concerning the moving picture portion that solely forms the moving picture in said moving icon that continues to move.

6. The electronic device that displays moving picture icons according to claim 5, wherein
the information concerning the moving picture portion acquired by said means for acquiring information concerning a moving picture portion commonly relates to a plurality of icons.

7. The electronic device that displays moving picture icons according to any one of claims 2 to 6, further comprising:
a section for acquiring suspension information that acquires suspension information for suspending the aforementioned movement, even while said detection of said moving picture icon image information continues, wherein
said section for consecutively displaying moving picture icon images suspends said movements when said section for acquiring suspension information obtains said suspension information.

8. The electronic device that displays moving picture icons according to claim 7, wherein
said suspension information is obtained upon entering a power-saving mode.

9. The electronic device that displays moving picture icons according to any one of claims 2 to 8, wherein
circulating-form moving picture icon image information concerns the movements of moving pictures based on the moving picture icon image information that moves for a prescribed time applies.

10. The electronic device that displays moving picture icons according to any one of claims 1 to 9, wherein
said electronic device is a cellular phone.

11. A method of displaying a moving picture icon, which is a method for operation of an eclectic device for displaying an icon on a screen, comprising:
selecting and detecting an icon so as to detect that the icon on the screen has been selected;
acquiring moving picture icon image information, whereby the information is acquired and the information corresponds to an icon regarding which the selection thereof is detected by said step for selecting and detecting the icon, during which information continues to move while said detection continues; and
displaying moving picture icon image information that displays moving picture icon image information acquired by said step for acquiring moving picture icon image information.

12. A mobile terminal device displaying an icon on a screen, comprising:
a section for storing icon image information that stores image information regarding the icon that should be displayed on said screen;
a section for selecting and detecting an icon so as to detect that the icon on the screen has been selected;
a section for generating information concerning a group of icon images displayed at the time of selection that acquires icon image information that corresponds to an icon regarding which selection is detected by said section for selecting and detecting an icon from said section for storing icon image information, processes the icon image information, and generates information concerning the group of icon images displayed at the time of selection that includes a plurality of different new items of icon image information; and
a section for consecutively displaying icon images displayed at the time of selection that displays an icon image based on new icon image information included in information concerning a group of icon images displayed at the time of selection that is generated by said section for generating information concerning the group of icon images displayed at the time of selection.

13. The mobile terminal device according to claim 12, wherein
said generation by said section for generating information concerning the group of icon images displayed at the time of selection is sequentially performed for each instance of display by said section for consecutively displaying icon images displayed at the time of selection, and said generated information is deleted after the end of displaying thereof.

14. The mobile terminal device according to claim 12 or 13, wherein
said section for generating information concerning the group of icon images displayed at the time of selection comprises,
a means for partial processing that performs partial processing in regards to an icon regarding which selection has been detected by the section for selecting and detecting an icon.

15. The mobile terminal device according to any one of claims 12 to 14, further comprising:
a section for generating information concerning the group of icon images displayed at the time of selection that acquires and processes icon image information that does not correspond to an icon regarding which selection has been detected by said section for selecting and detecting from said section for storing icon image information, wherein the section for generating information generates information concerning the group of icon images displayed at the time of selection that comprises a plurality of different new items of icon image information.

16. The mobile terminal device according to any one of claims 12 to 15, further comprising:
a section for displaying background image information that displays the background image information in the form of an image that structures the background on said screen not displaying an icon, and
a section for changing the display of background image information that changes the display of said section for displaying background image information if said section for selecting and detecting detects selection.

17. The mobile terminal device according to any one of claims 12 to 16, wherein
said section for generating information concerning a group of icon images displayed at the time of selection comprises,
means for changing icon color information that changes a whole or a part of the icon color information, which is information relating to the color of an icon, among the icon image information corresponding to said icon regarding which selection has been detected.

18. The mobile terminal device according to any one of claims 12 to 17, wherein
said section for generating information concerning the group of icon images displayed at the time of selection comprises,
means for changing the icon luminance information that changes a whole or a part of the icon luminance information, which is information relating to icon luminance, among the icon image information that corresponds to the icon regarding which selection has been detected.

19. The mobile terminal device according to any one of claims 12 to 18, comprising:
a section for acquiring icon image information, wherein
the icon image information acquired through said section for acquiring icon image information is stored in said section for storing icon image information.

20. The mobile terminal device according to any one of claims 12 to 19, wherein
said section for generating information concerning a group of icon images displayed at the time of selection comprises,
means for extracting an item within an icon image that extracts a portion exhibiting a high degree of luminance in an icon image regarding which selection has been detected via the section for selecting and detecting an icon, and
means for displaying a *kirakira-mark,* which displays a *kirakira-mark* in regards to the item within the icon image extracted by said means for extracting the item from within the icon image.

21. The mobile terminal device according to claim 20, comprising:
an indicator that operates in connection with transfer of *kirakira* that performs processes whereby a *kirakira-mark* displayed by said means for displaying a *kirakira-mark* is transferred from the icon regarding which selection has been detected most recently by the section for selecting and detecting an icon to the icon regarding which selection is currently being performed through the section for selecting and detecting an icon, following which such *kirakira-mark* is displayed.

22. The mobile terminal device according to any one of claims 12 to 21, wherein
said section for generating information concerning a group of icon images displayed at the time of selection comprises,
means for forming a circular ripple pattern that forms s circular ripple pattern in the icon image regarding which selection has been detected by said section for selecting and detecting an icon.

23. The mobile terminal device according to any one of claims 12 to 22, wherein
said mobile terminal device has telephone functions.

24. A method of operating a mobile terminal device that comprises a section for storing icon image information that stores icon image information that should be displayed on the screen, comprising:
selecting and detecting an icon so as to detect that an icon on the screen has been selected;
generating information concerning a group of icon images displayed at the time of selection involving acquisition and processing of icon image information that corresponds to the icon whose selection is detected through the section for selecting and detecting an icon from the section for storing icon image information and information concerning a group of icon images displayed at the time of selection that comprises a plurality of different new items of icon image information is generated; and
consecutively displaying icon images displayed at the time of selection whereby consecutive outputting takes place regarding a new icon image included among information concerning a group of icon images displayed at the time of selection that is generated through the step for generating information concerning the group of icon images displayed at the time of selection.
